(19)

**Europäisches Patentamt**
**European Patent Office**
**Office européen des brevets**

(11)  **EP 4 485 287 A1**

(12)  **EUROPEAN PATENT APPLICATION**

(43) Date of publication:
01.01.2025  Bulletin 2025/01

(51) International Patent Classification (IPC):
**G06N 5/01** (2023.01)       **G06N 7/01** (2023.01)

(21) Application number: **24173847.5**

(22) Date of filing: **02.05.2024**

(52) Cooperative Patent Classification (CPC):
**G06N 5/01; G06N 7/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.06.2023  JP 2023105888**

(71) Applicant: **Fujitsu Limited
Kawasaki-shi, Kanagawa 211-8588 (JP)**

(72) Inventors:
• **WATANABE, Yasuhiro
Kawasaki-shi, Kanagawa, 211-8588 (JP)**
• **TAMURA, Hirotaka
Yokohama-shi, Kanagawa, 223-0066 (JP)**

(74) Representative: **Hoffmann Eitle
Patent- und Rechtsanwälte PartmbB
Arabellastraße 30
81925 München (DE)**

(54)  **DATA PROCESSING DEVICE, PROGRAM, AND DATA PROCESSING METHOD**

(57)    A data processing device includes: a first holding circuit that holds a representative value of each variable group of a plurality of variable groups, formed with at least two binary variables of different values or equal values included in an evaluation function of a combinatorial optimization problem, and that is a value of one of the at least two binary variables; a first memory that stores a plurality of first coupling coefficients that indicate magnitudes of interaction between the variable groups of the plurality of variable groups; a second holding circuit that holds a first local field to be used to specify a first amount of change to be caused in a value of the evaluation function by a change in the representative value of each variable group of the plurality of variable groups; a change amount calculation circuit that calculates the first amount of change for each variable group of the plurality of variable groups, using the first local field; a selection circuit that accepts a change in the representative value of one variable group of the plurality of variable groups, based on the first amount of change calculated for each variable group of the plurality of variable groups; a first updating circuit that updates the representative value of a first variable group for which a change in the representative value is accepted, among the plurality of variable groups; and a second updating circuit that updates the first local field, using a second coupling coefficient that has been read, from the plurality of first coupling coefficients stored in the first memory, based on a first identification number of the first variable group.

FIG. 7

EP 4 485 287 A1

**Description**

FIELD

The embodiments discussed herein are related to a data processing device, a program, and a data processing method.

BACKGROUND

There is an Ising machine that uses an Ising-type evaluation function as a device that computes large-scale discrete optimization problems that von Neumann computers are not good at. In a case where the Ising machine is used, a combinatorial optimization problem is transformed into an Ising model that represents the spin behavior of a magnetic material. The Ising machine searches for a state of the Ising model in which a value of the Ising-type evaluation function is locally minimized, by a Markov Chain Monte Carlo method such as a simulated annealing method or a replica exchange method (also called a parallel tempering method or the like). Hereinafter, the Markov Chain Monte Carlo method will be abbreviated as the MCMC method. The state in which the minimum value of local minimum values of the evaluation function is reached is regarded as an optimal solution. A state of the Ising model may be expressed by a combination of values of a plurality of binary variables. As a value of each of the binary variables, 0 or 1 may be used. In view of this, the binary variables may be referred to as bits.

The Ising-type evaluation function is defined by the following Expression (1), for example.
[Math. 1]

$$E(x) = - \sum_{<i,j>} W_{ij} x_i x_j - \sum_i b_i x_i \qquad (1)$$

The first term on the right side is obtained by integrating the products of values (0 or 1) of two binary variables and a weight value (also called a coupling coefficient) for all combinations of all binary variables of the Ising model with neither omission nor overlapping. A binary variable having i as the identification number is represented by $x_i$, a binary variable having j as the identification number is represented by $x_j$, and a coupling coefficient indicating the magnitude of correlation between the binary variables having i and j as the identification numbers is represented by $W_{ij}$. The second term on the right side is obtained by calculating a total sum of products of bias coefficients and binary variables for the respective identification numbers. A bias coefficient for the identification number = i is represented by $b_i$.

Further, an amount of change ($\Delta E_i$) in the value of the evaluation function associated with a change in the value of $x_i$ is expressed by the following Expression (2).
[Math. 2]

$$\Delta E_i = E(x)|_{x_i \to 1 - x_i} - E(x) = -\Delta x_i \left( \sum_j W_{ij} x_j + b_i \right) = -\Delta x_i h_i \quad (2)$$

In Expression (2), when $x_i$ changes from 1 to 0, $\Delta x_i$ becomes -1, and, when $x_i$ changes from 0 to 1, $\Delta x_i$ becomes 1. Note that $h_i$ is called a local field, and is a variable that specifies $\Delta E_i$. $\Delta E_i$ is obtained by multiplying $h_i$ by a sign (+1 or -1) in accordance with $\Delta x_i$.

For example, in a case where $\Delta E_i$ is smaller than a noise value obtained based on a random number and the value of a temperature parameter, the Ising machine searches for a solution by repeating a process of inverting the value of $x_i$ and updating the local field. Note that a state in which the value of the evaluation function becomes a local maximum may be searched for by a change of the sign of the evaluation function.

Since a plurality of processes including calculation of $\Delta E_i$, determination as to whether or not to invert the value of $x_i$, and the like can be performed in parallel, parallel trials for a plurality of binary variables are possible.

There is a conventional process in which the number of binary variables for which a change (hereinafter sometimes also referred to as a transition) in value is allowed in one trial of a process by the MCMC method is set to one (this conventional process will be hereinafter referred to as a single-bit transition process). In the single-bit transition process, however, when a solution fits into a local solution, it is difficult to escape from the local solution, and the search speed might drop in some cases.

Therefore, there is a suggested process for determining whether or not transitions of a plurality of bits are possible based on a result of calculation of the amount of change in the value of the evaluation function in a case where transitions of the plurality of bits occur, and causing transitions of the plurality of bits in a case where the transitions are allowed. Hereinafter, such a process will be referred to as a multiple-bit transition process. By the multiple-bit transition process, escape of a solution from a local solution is facilitated, and the search speed can be increased.

Japanese Laid-open Patent Publication Nos. 2020-021209, 2020-064536, and 2021-165965 are disclosed as related art.

SUMMARY

TECHNICAL PROBLEM

In the conventional multiple-bit transition process, the configuration for calculating an amount of change in the value of the evaluation function in a case where transitions of a plurality of bits occur, the configuration for propagating data, and the like become complicated. Therefore, it is difficult to efficiently evaluate transitions of a plurality of bits by a parallel trial.

In one aspect, the embodiments aim to provide a data processing device, a program, and a data processing method capable of efficiently evaluating transitions of a plurality of bits.

According to an aspect of the embodiments, a data processing device includes: a first holding circuit that holds a representative value of each variable group of a plurality of variable groups, formed with at least two binary variables of different values or equal values included in an evaluation function of a combinatorial optimization problem, and that is a value of one of the at least two binary variables; a first memory that stores a plurality of first coupling coefficients that indicate magnitudes of interaction between the variable groups of the plurality of variable groups; a second holding circuit that holds a first local field to be used to specify a first amount of change to be caused in a value of the evaluation function by a change in the representative value of each variable group of the plurality of variable groups; a change amount calculation circuit that calculates the first amount of change for each variable group of the plurality of variable groups, using the first local field; a selection circuit that accepts a change in the representative value of one variable group of the plurality of variable groups, based on the first amount of change calculated for each variable group of the plurality of variable groups; a first updating circuit that updates the representative value of a first variable group for which a change in the representative value is accepted, among the plurality of variable groups; and

a second updating circuit that updates the first local field, using a second coupling coefficient that has been read, from the plurality of first coupling coefficients stored in the first memory, based on a first identification number of the first variable group.

ADVANTAGEOUS EFFECTS OF INVENTION

In one aspect, the embodiments can efficiently evaluate transitions of a plurality of bits.

BRIEF DESCRIPTION OF DRAWINGS

FIG. 1 is a diagram illustrating an example of an equivalent spin;
FIGs. 2A and 2B are diagrams illustrating examples of binary variable pairs selected as equivalent spins;
FIG. 3 is a diagram illustrating an example of a state transition in a case where a different-value equivalent spin is used;
FIG. 4 is a diagram illustrating an example of a state transition in a case where a same-value equivalent spin is used;
FIG. 5 is a diagram illustrating an example of a matrix indicating items that contribute to inequality constraints, and a generated neighborhood list;
FIG. 6 is a diagram illustrating an example of a parallel trial using equivalent spins;
FIG. 7 is a diagram illustrating an example of a data processing device according to a first embodiment;
FIG. 8 is a table illustrating an example of generation of an enable signal;
FIG. 9 is a flowchart illustrating a flow of an example of an enable signal generation process;
FIG. 10 is a timing chart illustrating an example of an overall operation of the data processing device according to the first embodiment;
FIG. 11 is a flowchart illustrating an example of processing procedures in the entire data processing device according to the first embodiment;
FIG. 12 is a flowchart illustrating an example of processing procedures in a single-bit transition process;

FIG. 13 is a flowchart illustrating an example of processing procedures in an equivalent spin transition process;

FIG. 14 is a diagram illustrating an example of a data processing device according to a second embodiment;

FIG. 15 is a diagram for explaining coupling coefficients stored in an update coupling coefficient memory;

FIG. 16 is a timing chart illustrating an example of an overall operation of the data processing device according to the second embodiment;

FIG. 17 is a timing chart illustrating an example of processing timings in an updating process;

FIG. 18 is a flowchart illustrating an example of processing procedures in the entire data processing device according to the second embodiment;

FIG. 19 is a flowchart illustrating an example of processing procedures in a single-bit transition process in the data processing device according to the second embodiment;

FIG. 20 is a diagram illustrating an example of a data processing device according to a third embodiment;

FIG. 21 is a timing chart illustrating an example of an overall operation of the data processing device according to the third embodiment; and

FIG. 22 is a diagram illustrating an example of the hardware of a computer that is an example of a data processing device.

DESCRIPTION OF EMBODIMENTS

In the description below, modes for carrying out the embodiments will be described with reference to the drawings.

The data processing device of each embodiment described below handles a variable group including two or more binary variables of different values or equal values included in an evaluation function of a combinatorial optimization problem, as binary variables corresponding to one spin. Therefore, the above variable group will be hereinafter referred to as an equivalent spin.

Also, in the description below, an equivalent spin including two or more binary variables of different values will be sometimes referred to as a different-value equivalent spin, and an equivalent spin including two or more binary variables of the same value will be sometimes referred to as a same-value equivalent spin. By handling such a binary variable group as an equivalent spin, it becomes possible to perform a parallel trial similar to a single-bit transition process as described below.

Note that, in the description below, an equivalent spin will be described as assuming that a spin includes two binary variables, but an equivalent spin may include three or more binary variables.

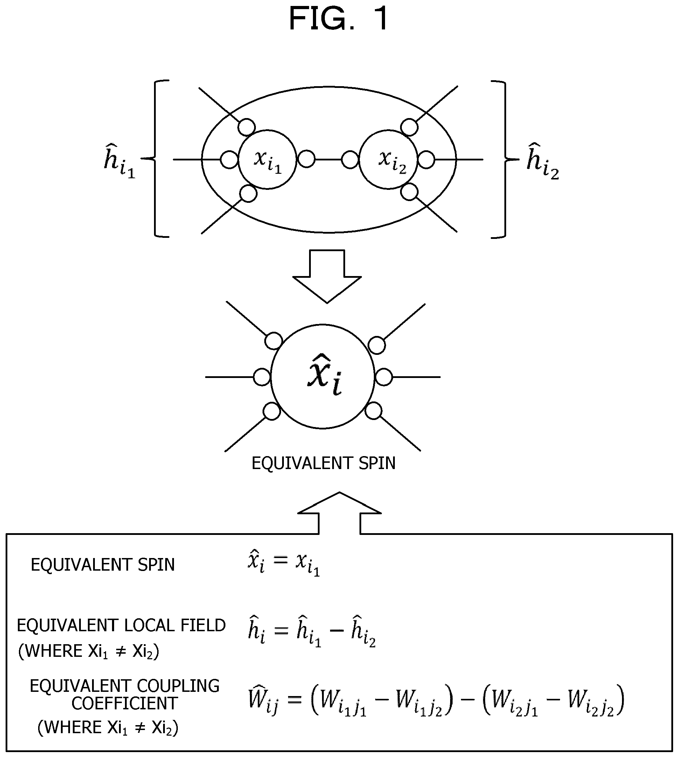

FIG. 1 is a diagram illustrating an example of an equivalent spin.

FIG. 1 illustrates an equivalent spin including two binary variables indicated by identification numbers $i_1$ and $i_2$. The equivalent spin is denoted by $x_i$ with a hat. In the example described below, the value of the equivalent spin is expressed by Expression (3).

[Math. 3]

$$\hat{x}_i = x_{i_1} \qquad (3)$$

In other words, the value of the equivalent spin is represented by the value of one of the two binary variables included in the equivalent spin. Accordingly, the value of Expression (3) may also be referred to as a representative value of a variable group including two binary variables.

Also, in the description below, a variable that specifies the amount of change to be caused in the value of the evaluation function by a change in the value of an equivalent spin will be referred to as an equivalent local field. In the following example, the value of the equivalent local field of a different-value equivalent spin is expressed by Expression (4), and the value of the equivalent local field of a same-value equivalent spin is expressed by Expression (5).

[Math. 4]

$$\hat{h}_i = \hat{h}_{i_1} - \hat{h}_{i_2} \qquad (4)$$

[Math. 5]

$$\hat{h}_i = \hat{h}_{i_1} + \hat{h}_{i_2} + W_{i_1 i_2} \qquad (5)$$

In Expressions (4) and (5), the variable having the identification number $i_1$ assigned to h accompanied by a hat is an equivalent local field that specifies the amount of change to be caused in the value of the evaluation function by a change in the value of one of the two binary variables included in the equivalent spin. The variable having the identification number $i_2$ assigned to h accompanied by a hat is an equivalent local field that specifies the amount of change to be caused in the value of the evaluation function by a change in the value of the other one of the two binary variables included in the equivalent spin.

Further, in the description below, a coupling coefficient (hereinafter referred to as an equivalent coupling coefficient) indicating the magnitude of an interaction between a plurality of equivalent spins is expressed by Expression (6).

[Math. 6]

$$\widehat{W}_{ij} = \left(W_{i_1 j_1} - W_{i_1 j_2}\right) - \left(W_{i_2 j_1} - W_{i_2 j_2}\right) \qquad (6)$$

In Expression (6), the coupling coefficient having an identification number $i_1 j_1$ assigned to W indicates the magnitude of the interaction that a first binary variable included in the equivalent spin of the identification number i gives to the first binary variable included in the equivalent spin of the identification number j. The coupling coefficient having an identification number $i_1 j_2$ assigned to W indicates the magnitude of the interaction that the first binary variable included in the equivalent spin of the identification number i gives to a second binary variable included in the equivalent spin of the identification number j. The coupling coefficient having an identification number $i_2 j_1$ assigned to W indicates the magnitude of the interaction that the second binary variable included in the equivalent spin of the identification number i gives to the first binary variable included in the equivalent spin of the identification number j. The coupling coefficient having an identification number $i_2 j_2$ assigned to W indicates the magnitude of the interaction that the second binary variable included in the equivalent spin of the identification number i gives to the second binary variable included in the equivalent spin of the identification number j.

In Expressions (4) and (5), the two equivalent local fields on the right side can be expressed by the following Expressions (7) and (8), respectively.

[Math. 7]

$$\hat{h}_{i_1} = \sum_{j \in D, j \neq i_2} W_{i_1 j} x_j + b_{i_1} = h_{i_1} - W_{i_1 i_2} x_{i_2} \qquad (7)$$

[Math. 8]

$$\hat{h}_{i_2} = \sum_{j \in D, j \neq i_1} W_{i_2 j} x_j + b_{i_2} = h_{i_2} - W_{i_1 i_2} x_{i_1} \qquad (8)$$

In Expressions (7) and (8), D represents a set of the identification numbers of all the binary variables. The variable having the identification number $i_1$ assigned to h is a local field that specifies the amount of change to be caused in the value of the evaluation function by a change in the value of the binary variable of the identification number $i_1$. The variable having the identification number $i_2$ assigned to h is a local field that specifies the amount of change to be caused in the value of the evaluation function by a change in the value of the binary variable of the identification number $i_2$. The equivalent local fields in Expressions (7) and (8) are the same as the local fields in a case where the coupling coefficient between the two binary variables included in an equivalent spin is set to 0.

The value of the equivalent local field of a different-value or same-value equivalent spin does not change regardless of how the values of the two binary variables included in the equivalent spin change, but changes in a case where the value of an equivalent spin having an equivalent coupling coefficient that is not 0 with respect to the equivalent spin changes. The initial value of the equivalent local field of an equivalent spin is calculated according to Expression (7) and Expression (8). The value of the equivalent local field of an equivalent spin in a case where the value of the equivalent spin changes can be updated by difference calculation.

An amount of change in the value of a different-value equivalent spin can be expressed by the following Expression (9).

[Math. 9]

$$\Delta \hat{x}_i = \Delta x_{i_1} = -\Delta x_{i_2} \qquad (9)$$

The amount of change to be caused in the value of the evaluation function by a change in the value of the different-value equivalent spin can be expressed by the following Expression (10).

[Math. 10]

$$\Delta \widehat{E}_i = -\left(h_{i_1} - h_{i_2} - W_{i_1 i_2}\Delta \hat{x}_i\right)\Delta \hat{x}_i = -\hat{h}_i \Delta \hat{x}_i \qquad (10)$$

As in Expression (10), the amount of change to be caused in the value of the evaluation function by a change in the value of the equivalent spin can be calculated by the product of the equivalent local field of the equivalent spin and the amount of change in the value of the equivalent spin.

As the different-value equivalent spin changes, the equivalent local field can be updated according to the following Expression (11).

[Math. 11]

$$\hat{h}_i = \hat{h}_{i_1} - \hat{h}_{i_2} \qquad (11)$$
$$= h_{i_1} - h_{i_2} - W_{i_1 i_2}\left(x_{i_2} - x_{i_1}\right) = h_{i_1} - h_{i_2} - W_{i_1 i_2}\Delta \hat{x}_i$$

An amount of change in the value of a same-value equivalent spin can be expressed by the following Expression (12).

[Math. 12]

$$\Delta \hat{x}_i = \Delta x_{i_1} = \Delta x_{i_2} \qquad (12)$$

The amount of change to be caused in the value of the evaluation function by a change in the value of the same-value equivalent spin can be expressed by the following Expression (13).

[Math. 13]

$$\Delta \widehat{E}_i = -\left(h_{i_1} + h_{i_2} + W_{i_1 i_2}\Delta \hat{x}_i\right)\Delta \hat{x}_i = -\hat{h}_i \Delta \hat{x}_i \qquad (13)$$

As in Expression (13), the amount of change to be caused in the value of the evaluation function by a change in the value of the equivalent spin can be calculated by the product of the equivalent local field of the equivalent spin and the amount of change in the value of the equivalent spin.

As the value of the same-value equivalent spin changes, the equivalent local field can be updated according to the following Expression (14).

[Math. 14]

$$\hat{h}_i = \hat{h}_{i_1} + \hat{h}_{i_2} + W_{i_1 i_2} \qquad (14)$$
$$= h_{i_1} + h_{i_2} + W_{i_1 i_2}\left(1 - x_{i_1} - x_{i_2}\right) = h_{i_1} + h_{i_2} + W_{i_1 i_2}\Delta \hat{x}_i$$

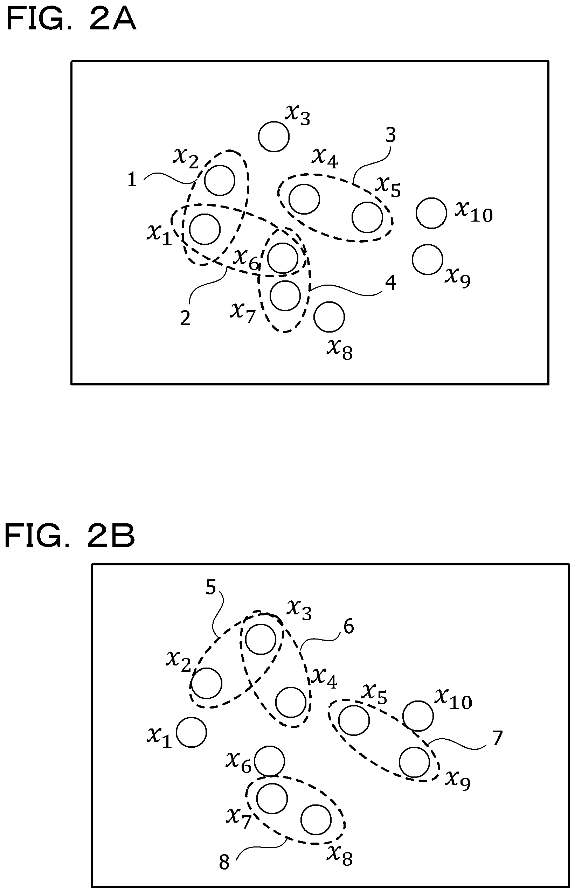

FIGs. 2A and 2B are diagrams illustrating examples of binary variable pairs selected as equivalent spins.

FIG. 2A illustrates a first example of selection of equivalent spins, and FIG. 2B illustrates a second example of selection of equivalent spins. In the first example of selection, an equivalent spin 1 formed with $x_1$ and $x_2$, an equivalent spin 2 formed with $x_1$ and $x_6$, an equivalent spin 3 formed with $x_4$ and $x_5$, and an equivalent spin 4 formed with $x_6$ and $x_7$ are obtained. In the second example of selection, an equivalent spin 5 formed with $x_2$ and $x_3$, an equivalent spin 6 formed with $x_3$ and $x_4$, an equivalent spin 7 formed with $x_5$ and $x_9$, and an equivalent spin 8 formed with $x_7$ and $x_8$ are obtained.

In the data processing device of each embodiment described below, some binary variable of all the binary variables are selected as equivalent spins, as illustrated in FIGs. 2A and 2B. Also, the data processing device may change the binary variables to be selected as equivalent spins during the solution search from the first example of selection example to the second example of selection. Note that all the binary variables may be selected so as to belong to one of the equivalent spins.

Whether to use different-value equivalent spins, or whether to use same-value equivalent spins is determined, with the following points being taken into consideration, for example.

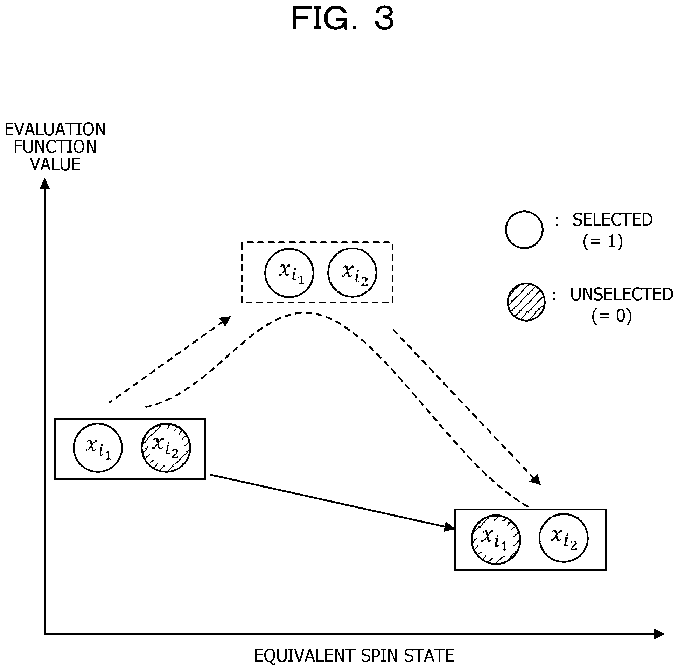

FIG. 3 is a diagram illustrating an example of a state transition in a case where a different-value equivalent spin is used. The vertical axis indicates the value of the evaluation function, and the horizontal axis indicates the state of the equivalent spin. Note that, in this example, it is assumed that a state of the equivalent spin having an evaluation function becoming smaller is searched for as a solution.

In a combinatorial optimization problem having an inequality constraint like the knapsack problem, it is effective to set a binary variable group connected by an inequality constraint as an equivalent spin. Note that the knapsack problem is a problem in which, when a plurality of items having value and weight (or capacity) given thereto are put into a knapsack with a weight limit (or a capacity limit), the method of putting the items with the maximum net profit is calculated.

For example, two binary variables represented by identification numbers $i_1$ and $i_2$ can be used as a binary variable pair indicating whether or not two items having weights close to each other are put into the knapsack, as illustrated in FIG. 3. In the description below, it is assumed that, when the value of a binary variable is 1, the binary variable indicates that the corresponding item is selected and is put into the knapsack, and, when the value of a binary variable is 0, the binary variable indicates that the corresponding item is not selected and is not put in the knapsack.

In a case where a transition is made from a state in which the values of the above two binary variables are 1 and 0 to a state in which the values of the two binary variables are both 1, the value of the evaluation function is large in the example in FIG. 3. There is a possibility that this state transition may be a state transition in which both of the two items enter the knapsack, causing the weight limit to be unsatisfied and violating the inequality constraint.

In such a case, it is preferable to set the two binary variables in FIG. 3 as a different-value equivalent spin. This is because, in a case where the value of a different-value equivalent spin is inverted, the values of the two binary variables change to (1, 0) or (0, 1), and a state transition that increases the value of the evaluation function as described above is avoided.

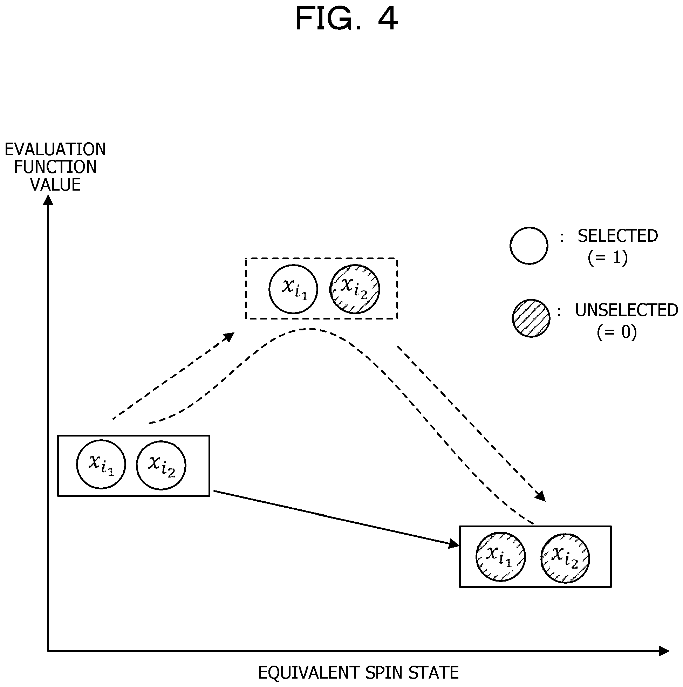

FIG. 4 is a diagram illustrating an example of a state transition in a case where a same-value equivalent spin is used. The vertical axis indicates the value of the evaluation function, and the horizontal axis indicates the state of the equivalent spin.

Depending on the method of formulating an evaluation function, such as the manner of determining the sign of the coefficient of the constraint term of the inequality constraint included in the evaluation function, it may be preferable to adopt a same-value equivalent spin even in a combinatorial optimization problem having an inequality constraint.

In a case where a transition is made from a state in which the values of the two binary variables are both 1 to a state in which one of the values of the two binary variables is 1 while the other is 0 as illustrated in FIG. 4, the value of the evaluation function is large in the example in FIG. 4.

In such a case, it is preferable to set the two binary variables in FIG. 4 as a same-value equivalent spin. This is because, in a case where the value of a same-value equivalent spin is inverted, the values of the two binary variables change to (1, 1) or (0, 0), and a state transition that increases the value of the evaluation function as described above is avoided.

In a case where there is a plurality of inequality constraints, a binary variable group having many inequality constraints that contribute in common may be preferentially set as an equivalent pair. As an example of a method of generating a neighborhood list indicating state variables having many inequality constraints that contribute in common, there is a method as described in the following document.

(Document) S. Umetani, "Exploiting variable associations to configure efficient local search algorithms in large-scale binary integer programs," European Journal of Operational Research 263 (2017) 72-81

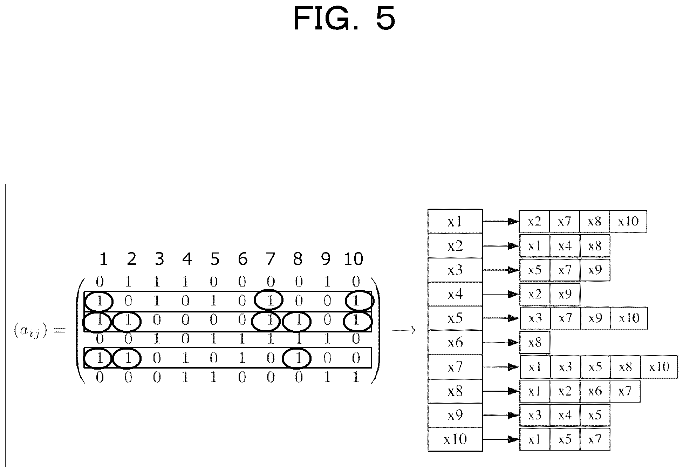

FIG. 5 is a diagram illustrating an example of a matrix indicating items that contribute to inequality constraints, and a generated neighborhood list.

FIG. 5 illustrates an example in which there are six inequality constraints for ten items. In FIG. 5, the matrix on the left side indicates whether or not each of the ten items contributes to each of the six inequality constraints. The value of a matrix element $a_{ij}$ is 1 when the j-th item contributes to the i-th inequality constraint, and is 0 when the j-th item does not contribute to the i-th inequality constraint. In the example in FIG. 5, the first item contributes to the second, third, and fifth inequality constraints.

The number of inequality constraints contributing in common to the first item is two for the second, seventh, eighth, and tenth items, and one for the third to sixth items.

In this case, the binary variables corresponding to the second, seventh, eighth, and tenth items are defined in the neighborhood list as the neighboring binary variables for the binary variable corresponding to the first item. Note that, in the example in FIG. 5, the binary variables corresponding to the first to tenth items are denoted by x1 to x10.

Conversion of a combinatorial optimization problem into an Ising model using equivalent spins as described above enables a multiple-bit transition through a parallel trial similar to a single-bit transition process. Note that the problem converted into an Ising model is almost the same as a problem called quadratic unconstrained binary optimization (QUBO) and is mutually convertible, and therefore, these problems will not be distinguished from each other in the description below.

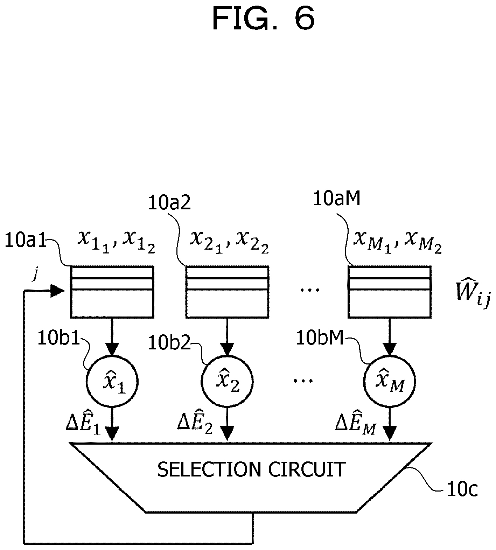

FIG. 6 is a diagram illustrating an example of a parallel trial using equivalent spins. FIG. 6 illustrates an example of a parallel trial using M equivalent spins.

The parallel trial is performed with storage circuits 10a1, 10a2,..., and 10aM, change amount calculation circuits 10b1, 10b2,..., and 10bM, and a selection circuit 10c, for example.

Each of the storage circuits 10a1 to 10aM stores equivalent coupling coefficients between one of the M equivalent spins and the other equivalent spins. For example, the storage circuit 10a1 stores equivalent coupling coefficient between an equivalent spin including two binary variables represented by identification numbers $1_1$ and $1_2$, and the other equivalent spins. Since the equivalent coupling coefficients do not depend on states, they may be calculated beforehand.

Each of the change amount calculation circuits 10b1 to 10bM calculates the amounts of change to be caused in the value of the evaluation function by changes in the respective values of the M equivalent spins. Change amount calculation is performed by calculating the product of an equivalent local field and an amount of change in the value of an equivalent spin, as indicated in Expression (10) or Expression (13). In a case where different-value equivalent spins are used, an equivalent local field expressed by Expression (4) is used. In a case where same-value equivalent spins are used, an equivalent local field expressed by Expression (5) is used.

The selection circuit 10c selects one of the M equivalent spins based on M amounts of change, and outputs the identification number j of the selected equivalent spin. When the equivalent local field is updated with a change in the value of the selected equivalent spin, j is used to read the equivalent coupling coefficients from the storage circuits 10a1 to 10aM.

When the value of the equivalent spin of identification number j changes, the equivalent local field is updated according to the following Expression (15).

[Math. 15]

$$\hat{h}_i \rightarrow \hat{h}_i + \widehat{W}_{ij} \Delta \hat{x}_j \qquad (15)$$

In Expression (15), the equivalent coupling coefficient is expressed by the above Expression (6), in a case where different-value equivalent spins are used. In a case where equivalent spins each including two binary variables of the same value are used, the equivalent coupling coefficient is expressed by the following Expression (16).

[Math. 16]

$$\widehat{W}_{ij} = (W_{i_1j_1} + W_{i_1j_2}) + (W_{i_2j_1} + W_{i_2j_2}) \qquad (16)$$

Note that, even if different-value equivalent spins and same-value equivalent spins coexist, only the initial value of the equivalent local field and the equivalent coupling coefficients are different, and the processing details of the parallel trial are the same as above.

The initial value of the equivalent local field of a different-value equivalent spin is expressed by the following Expression (17).

[Math. 17]

$$\hat{h}_i = h_{i_1} - h_{i_2} - W_{i_1i_2}(x_{i_2} - x_{i_1}) \qquad (17)$$

The initial value of the equivalent local field of a same-value equivalent spin is expressed by the following Expression (18).
[Math. 18]

$$\hat{h}_i = h_{i_1} + h_{i_2} + W_{i_1 i_2}\left(1 - x_{i_1} - x_{i_2}\right) \qquad (18)$$

An equivalent coupling coefficient between a different-value equivalent spin and a same-value equivalent spin is expressed by the following Expressions (19) and (20).
[Math. 19]

$$\widehat{W}_{ij} = \left(W_{i_1 j_1} - W_{i_1 j_2}\right) \mp \left(W_{i_2 j_1} - W_{i_2 j_2}\right) \qquad (19)$$

[Math. 20]

$$\widehat{W}_{ij} = \left(W_{i_1 j_1} + W_{i_1 j_2}\right) \mp \left(W_{i_2 j_1} + W_{i_2 j_2}\right) \qquad (20)$$

Expression (19) represents an equivalent coupling coefficient in a case where j is the identification number of a different-value equivalent spin. Expression (20) represents an equivalent coupling coefficient in a case where j is the identification number of a same-value equivalent spin.

In a case where i is the identification number of a different-value equivalent spin, the upper sign is used between the upper sign - and the lower sign +. In a case where i is the identification number of a same-value equivalent spin, the lower sign is used between the upper sign - and the lower sign +.

Next, a data processing device according to a first embodiment is described.

(First Embodiment)

As described below, the data processing device of the first embodiment includes a function of performing a single-bit transition process, and a function of performing a transition process using equivalent spins as described above (this transition process will be hereinafter referred to as an equivalent spin transition process). Both functions are switchable.

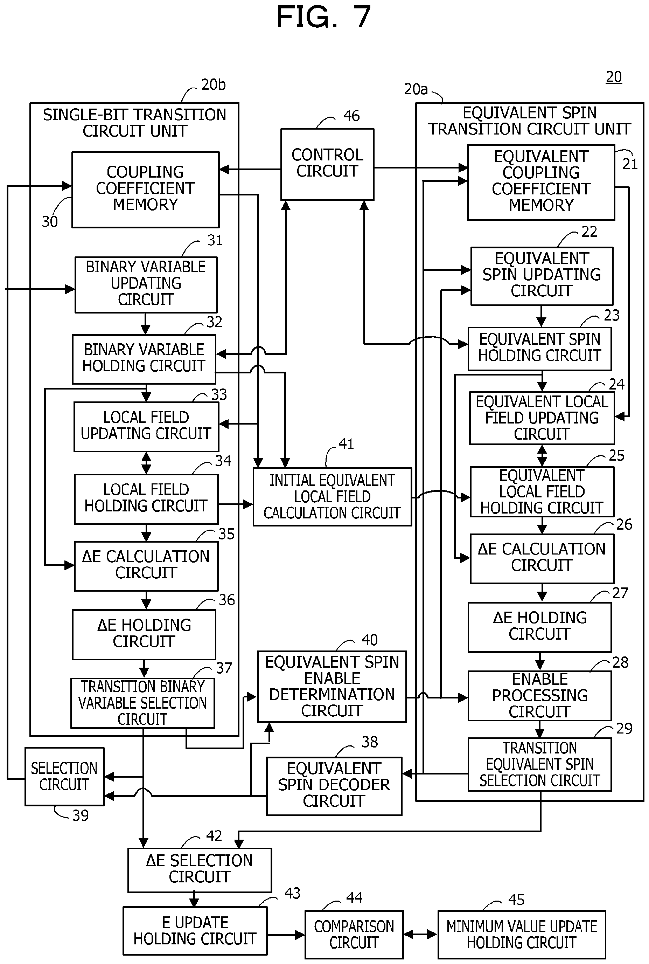

FIG. 7 is a diagram illustrating an example of the data processing device according to the first embodiment.

A data processing device 20 includes an equivalent spin transition circuit unit 20a that performs an equivalent spin transition process, and a single-bit transition circuit unit 20b that performs a single-bit transition process.

The equivalent spin transition circuit unit 20a includes an equivalent coupling coefficient memory 21, an equivalent spin updating circuit 22, an equivalent spin holding circuit 23, an equivalent local field updating circuit 24, an equivalent local field holding circuit 25, a ΔE calculation circuit 26, and a ΔE holding circuit 27. Further, the equivalent spin transition circuit unit 20a includes an enable processing circuit 28 and a transition equivalent spin selection circuit 29.

The single-bit transition circuit unit 20b includes a coupling coefficient memory 30, a binary variable updating circuit 31, a binary variable holding circuit 32, a local field updating circuit 33, a local field holding circuit 34, a ΔE calculation circuit 35, a ΔE holding circuit 36, and a transition binary variable selection circuit 37.

Further, the data processing device 20 includes an equivalent spin decoder circuit 38, a selection circuit 39, an equivalent spin enable determination circuit 40, and an initial equivalent local field calculation circuit 41. These are used for matching between a single-bit transition process and an equivalent spin transition process.

Also, the data processing device 20 includes a ΔE selection circuit 42, an E update holding circuit 43, a comparison circuit 44, a minimum value update holding circuit 45, and a control circuit 46.

In the description below, the respective elements are explained.

The equivalent coupling coefficient memory 21 stores M × M equivalent coupling coefficients indicating the magnitudes of interactions among the respective equivalent spins of a plurality of (hereinafter referred to as M) equivalent spins. The equivalent coupling coefficients are expressed by Expression (6), Expression (16), Expression (19), or Expression (20) described above. The equivalent coupling coefficient memory 21 corresponds to the storage circuits 10a1 to lOaM in FIG. 6. The equivalent coupling coefficient memory 21 may be formed with, for example, a dynamic random access memory (DRAM), a static random access memory (SRAM), a volatile storage device that is an electronic circuit such as a register, or the like. The equivalent coupling coefficient memory 21 may be a nonvolatile storage device that is an electronic circuit such as a flash memory, or a storage device such as a hard disk drive (HDD). A storage device to be adopted as the equivalent coupling coefficient memory 21 can be selected as appropriate from among the storage devices as described above, in accordance with the number (= M) of equivalent spins, the number of bits of the equivalent coupling coefficients, and the like.

The equivalent spin updating circuit 22 updates the value of an equivalent spin that is allowed to change its value (a representative value that is one of the two or more binary variables constituting the equivalent spin) among the M equivalent spins. The equivalent spin updating circuit 22 performs updating by inverting (flipping), from 1 to 0 or from 0 to 1, the value of the equivalent spin designated by an identification number output from the transition equivalent spin selection circuit 29, among the values of the M equivalent spins held in the equivalent spin holding circuit 23.

The equivalent spin holding circuit 23 includes a holding circuit such as a register, for example, and holds the values of the M equivalent spins. Also, the equivalent spin holding circuit 23 outputs the amount of change in the value of the equivalent spin to be used in updating the equivalent local field and calculating the amount of change in the evaluation function.

The equivalent local field updating circuit 24 updates the equivalent local field held in the equivalent local field holding circuit 25, using the equivalent coupling coefficient read from the equivalent coupling coefficient memory 21 based on the identification number output from the transition equivalent spin selection circuit 29. To update the equivalent local field according to Expression (15) mentioned above, the equivalent local field updating circuit 24 may be implemented with a multiplier and an adder, for example.

The equivalent local field holding circuit 25 includes a holding circuit such as a register, for example, and holds M equivalent local fields. The equivalent local field of a different-value equivalent spin is expressed by Expression (4) mentioned above, and the equivalent local field of a same-value equivalent spin is expressed by Expression (5) mentioned above.

The $\Delta E$ calculation circuit 26 calculates an amount of change in the value of the evaluation function for each of the M equivalent spins, using the equivalent local fields held in the equivalent local field holding circuit 25. The $\Delta E$ calculation circuit 26 corresponds to the change amount calculation circuits 10b1 to 10bM in FIG. 6. The $\Delta E$ calculation circuit 26 may be implemented with a multiplier, for example, to calculate amounts of change according to Expression (13) mentioned above.

The $\Delta E$ holding circuit 27 includes a holding circuit such as a register, for example, and holds the amounts of change in the value of the evaluation function, which have been calculated for the respective M equivalent spins.

Based on an enable signal described later, the enable processing circuit 28 invalidates processing to be performed by the transition equivalent spin selection circuit 29 described next, for an equivalent spin whose value is not allowed to change.

The transition equivalent spin selection circuit 29 accepts a change in the value of one of the M equivalent spins based on the amounts of change in the value of the evaluation function, which have been calculated for the respective M equivalent spins (excluding those invalidated). The transition equivalent spin selection circuit 29 determines an equivalent spin for which a change in value is to be accepted, according to the MCMC method. Also, the transition equivalent spin selection circuit 29 outputs the identification number of the determined equivalent spin, and the amount of change to be caused in the value of the evaluation function by a change in the value of the equivalent spin.

For example, in a case where the greater one between the amount of change to be caused in the value of the evaluation function by a change in the value of a certain equivalent spin and 0 is smaller than a threshold obtained based on a random number and a value of a temperature parameter, the transition equivalent spin selection circuit 29 allows a change in the value of the equivalent spin. For example, -log(rand) $\times$ T is used as the threshold. rand represents a uniform random number in the range of 0 to 1, and T represents the value of the temperature parameter. In a case where changes in the values of a plurality of equivalent spins are allowed, the transition equivalent spin selection circuit 29 may select one equivalent spin randomly or in accordance with a predetermined rule, and output the identification number of the selected equivalent spin.

The transition equivalent spin selection circuit 29 may select one equivalent spin for which a change in value is allowed, based on the M amounts of change in the value of the evaluation function, and the threshold. Such a selection method is sometimes called a rejection-free method. By this method, the transition equivalent spin selection circuit 29 calculates, for the respective M amounts of change, M max function values to output the greater value between 0 and an amount of change, for example. The transition equivalent spin selection circuit 29 adds Tlog(-log(randi)) to each of the M max function values. Here, $rand_i$ represents a uniform random number in the range of 0 to 1, which has been generated for each equivalent spin. The transition equivalent spin selection circuit 29 then outputs the identification number of the equivalent spin to provide the smallest addition result when the values change among the M equivalent spins.

The coupling coefficient memory 30 stores N $\times$ N coupling coefficients indicating the magnitudes of interactions between the respective binary variables of a plurality of (hereinafter referred to as N) binary variables included in the evaluation function. The coupling coefficient memory 30 may be formed with, for example, a DRAM, SRAM, a volatile storage device that is an electronic circuit such as a register, or the like. The coupling coefficient memory 30 may be a nonvolatile storage device that is an electronic circuit such as a flash memory, or a storage device such as an HDD.

The binary variable updating circuit 31 updates the value of a binary variable for which a change in value is accepted. The binary variable updating circuit 31 performs updating by flipping the value of the binary variable designated by the identification number output from the transition binary variable selection circuit 37, among the values of the N binary variables held in the binary variable holding circuit 32.

The binary variable holding circuit 32 includes a holding circuit such as a register, for example, and holds the values of the N binary variables. Also, the binary variable holding circuit 32 outputs the amount of change in the value of a binary variable to be used in updating the local field and calculating an amount of change in the evaluation function.

The local field updating circuit 33 updates the local fields, using one coupling coefficient of the plurality of coupling coefficients read from the coupling coefficient memory 30 based on the identification number output from the transition binary variable selection circuit 37. The updating of the local field in accordance with a change in the value of the binary variable of the identification number j is performed by adding $W_{ij}\Delta x_j$ to $h_i$ indicated in Expression (2). To perform such updating, the local field updating circuit 33 may be implemented with a multiplier and an adder, for example.

The local field holding circuit 34 includes a holding circuit such as a register, for example, and holds N local fields.

The $\Delta E$ calculation circuit 35 calculates an amount of change in the value of the evaluation function for each of the N binary variables, using the local fields held in the local field holding circuit 34. The $\Delta E$ calculation circuit 35 may be implemented with a multiplier, for example, to calculate amounts of change according to Expression (2) mentioned above.

The $\Delta E$ holding circuit 36 includes a holding circuit such as a register, for example, and holds the amounts of change in the value of the evaluation function, which have been calculated for the respective N binary variables.

The transition binary variable selection circuit 37 accepts a change in the value of one of the N binary variables based on the amounts of change in the value of the evaluation function, which have been calculated for the respective N binary variables. The transition binary variable selection circuit 37 determines a binary variable for which a change in value is to be accepted, according to the MCMC method. Also, the transition binary variable selection circuit 37 outputs the identification number of the determined binary variable, and the amount of change to be caused in the value of the evaluation function by a change in the value of the binary variable.

For example, in a case where the greater one between the amount of change to be caused in the value of the evaluation function by a change in the value of a certain binary variable and 0 is smaller than a threshold obtained based on a random number and a value of a temperature parameter, the transition binary variable selection circuit 37 allows a change in the value of the binary variable. In a case where changes in the values of a plurality of binary variables are allowed, the transition binary variable selection circuit 37 may select one binary variable randomly or in accordance with a predetermined rule, and output the identification number of the selected binary variable. Alternatively, the transition binary variable selection circuit 37 may be a circuit that determines a binary variable for which a change in value is to be accepted, by a rejection-free method as mentioned above.

The equivalent spin decoder circuit 38 generates and outputs the identification numbers of the two binary variables included in the equivalent spin of an identification number, based on the identification number output from the transition equivalent spin selection circuit 29. The equivalent spin decoder circuit 38 may be implemented with a holding circuit, a memory, or the like that holds information indicating the correspondence relationship between the identification numbers of equivalent spins and the identification numbers of binary variables, for example.

In a case where a single-bit transition process is being performed, the selection circuit 39 selects and outputs the identification number of the binary variable output by the transition binary variable selection circuit 37. In a case where a transition process using an equivalent spin is being performed, the selection circuit 39 selects and outputs the identification numbers of the two binary variables output by the equivalent spin decoder circuit 38. The selection circuit 39 performs the above selection, under the control of the control circuit 46, for example.

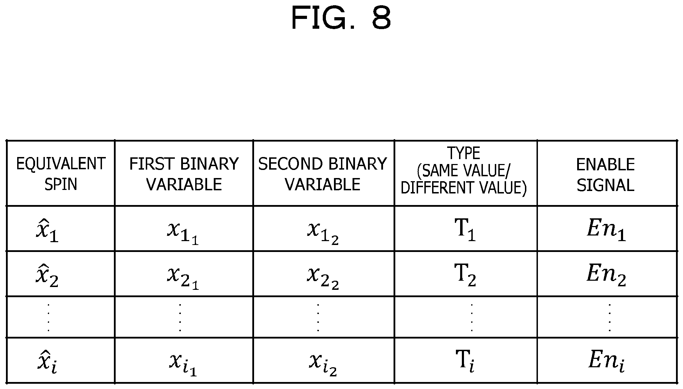

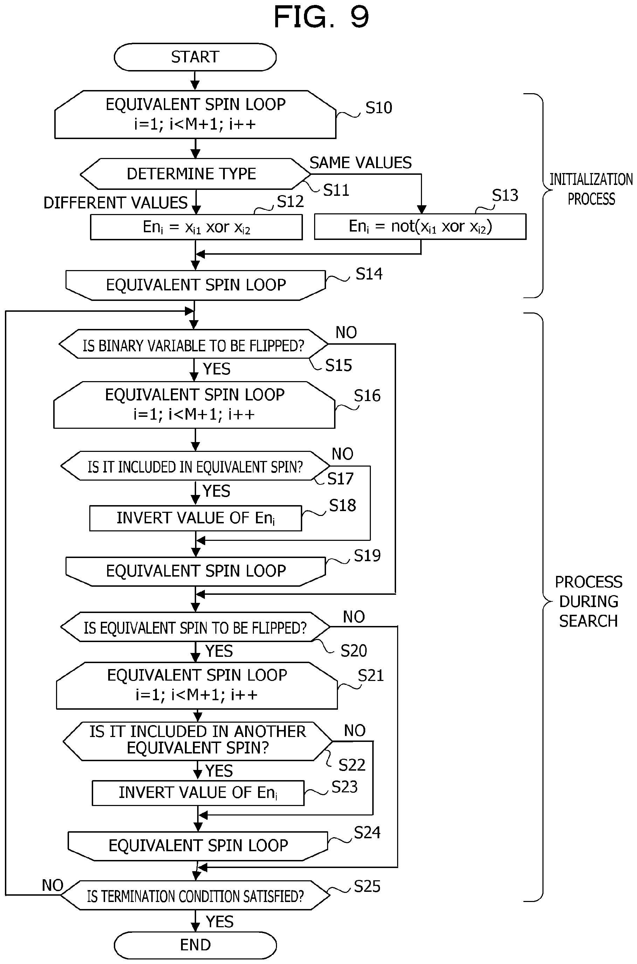

The equivalent spin enable determination circuit 40 generates an enable signal indicating whether or not to permit a change in the value of each equivalent spin, based on the identification numbers of the binary variables output from the transition binary variable selection circuit 37 or the equivalent spin decoder circuit 38. An example of the enable signal generation process will be described later (see FIGs. 8 and 9).

When a single-bit transition process is switched to an equivalent spin transition process, the initial equivalent local field calculation circuit 41 calculates the initial value of the equivalent local field indicated by Expression (17) or Expression (18), for example, using the values of the binary variables, the coupling coefficient, and the local field. The initial equivalent local field calculation circuit 41 may be implemented with an adder and a multiplier, for example.

In a case where a single-bit transition process is being performed, the $\Delta E$ selection circuit 42 selects and outputs the amount of change in the value of the evaluation function output by the transition binary variable selection circuit 37. In a case where a transition process using an equivalent spin is being performed, the $\Delta E$ selection circuit 42 selects and outputs the amount of change in the value of the evaluation function output by the transition equivalent spin selection circuit 29. The $\Delta E$ selection circuit 42 performs the above selection, under the control of the control circuit 46, for example.

The E update holding circuit 43 includes a holding circuit such as a register, and holds the value of the evaluation function. The E update holding circuit 43 acquires the amount of change selected by the $\Delta E$ selection circuit 42, updates the value of the evaluation function with the amount of change, and outputs the updated value.

The comparison circuit 44 compares the value of the evaluation function held in the E update holding circuit 43 with the minimum value of the evaluation function held in the minimum value update holding circuit 45.

The minimum value update holding circuit 45 includes a holding circuit such as a register, for example, and holds the minimum value of the evaluation function obtained so far. In a case where the comparison circuit 44 outputs a comparison result indicating that the value of the evaluation function held in the E update holding circuit 43 is smaller than the minimum value obtained so far, the minimum value update holding circuit 45 updates the minimum value with the value of the evaluation function. Also, the minimum value update holding circuit 45 holds the values of the N binary variables at the time when the minimum value was obtained. The values of the N binary variables held when a predetermined end condition is satisfied, for example, are then output as a solution to the combinatorial optimization problem.

The control circuit 46 controls each component of the data processing device 20. The control circuit 46 performs control to switch between a single-bit transition process and an equivalent spin transition process. For example, in a case where a change in the value of a binary variable is not accepted over a predetermined period of time in a single-bit transition process, there is a possibility that the solution fits into a local solution, and therefore, the control circuit 46 performs switching so that an equivalent spin transition process is performed.

The control circuit 46 may acquire evaluation function information that is input from the outside, and store N × N coupling coefficients included in the evaluation function information into the coupling coefficient memory 30. Also, the control circuit 46 may calculate the equivalent coupling coefficient expressed by Expression (6), Expression (16), Expression (19), or Expression (20) mentioned above based on the N × N coupling coefficients, and store the equivalent coupling coefficient into the equivalent coupling coefficient memory 21. Also, the control circuit 46 may determine initial values of the N binary variables, and cause the binary variable holding circuit 32 to hold the initial values. Further, the control circuit 46 may generate M equivalent spins, determine their initial values, and cause the equivalent spin holding circuit 23 to hold the determined initial values.

Also, the control circuit 46 may generate a threshold to be used when the transition equivalent spin selection circuit 29 or the transition binary variable selection circuit 37 determines an equivalent spin or a binary variable for which a change in value is to be accepted.

Each of the circuits in the data processing device 20 as described above can be formed with an electronic circuit such as an application specific integrated circuit (ASIC) or a field programmable gate array (FPGA), for example.

(Example of an Enable Signal Generation Process)

Next, an example of the enable signal generation process is described.

FIG. 8 is a table illustrating an example of generation of an enable signal.

As illustrated in FIG. 8, the equivalent spin enable determination circuit 40 generates an enable signal for each equivalent spin. In FIG. 8, the first binary variables and the second binary variables included in equivalent spins are illustrated. Further, the types (indicating a different-value equivalent spin or a same-value equivalent spin) of the equivalent spins are illustrated.

An enable signal ($En_i$) for a different-value equivalent spin is obtained by an exclusive OR of the values of the binary variables of the identification numbers $i_1$ and $i_2$. An enable signal ($En_i$) of a same-value equivalent spin is obtained by an exclusive NOR of the values of the binary variables of the subscript identification numbers $i_1$ and $i_2$.

The equivalent spin enable determination circuit 40 holds enable signal information as table data in a memory (not illustrated) as illustrated in FIG. 8, for example.

In a case where the identification number of the binary variable output by the transition binary variable selection circuit 37 is the identification number indicating a binary variable included in an equivalent spin, the equivalent spin enable determination circuit 40 inverts the value of the enable signal for the equivalent spin.

The equivalent spin enable determination circuit 40 performs a process of inverting the value of the enable signal for an equivalent spin, in accordance with the identification numbers of the two binary variables output by the equivalent spin decoder circuit 38. The inversion process is performed as follows, for example.

It is assumed that there are a same-value equivalent spin Y0 including binary variables X0 and X1, a different-value equivalent spin Y1 including binary variables X0 and X1, a different-value equivalent spin Y2 including binary variables x1 and x2, and a different-value equivalent spin Y3 including binary variables X2 and X3. Also, it is assumed that enable signals for Y0 to Y3 are En0 to En3. In a case where (X0, X1, X2, X3) = (0, 1, 1, 1) are regarded as initial values, the initial values of the enable signals for the respective equivalent spins are (En0, En1, En2, En3) = (0, 1, 0, 0).

In a case where the value of Y1 changes, the state of the binary variables transitions to (X0, X1, X2, X3) = (1,0,1,1). At this point of time, the equivalent spin enable determination circuit 40 sets the enable signals to (En0, En1, En2, En3) = (0, 1, 1, 0).

In the process of inverting the value of the enable signal for an equivalent spin, in a case where one of the two binary variables included in a certain equivalent spin is included in another equivalent spin, the value of the enable signal for the another equivalent spin is inverted. In the above example, the value of the enable signal (En2) of Y2 including one (X1) of X0 and X1 included in Y1 is inverted.

Also, in a process of inverting the value of the enable signal for an equivalent spin, in a case where the value of one of two equivalent spins that have the same two binary variables included therein and differ only in equivalent spin type is inverted, the value of any enable signal is not inverted. In the above example, Y0 and Y1 include X0 and X1, and differ only in type. The values of the enable signals (En0 and En1) for the two equivalent spins remain 0 and 1, and are not inverted. Note that the value of the enable signal (En3 of Y3 in the above example) for an equivalent spin not including any of the two binary variables included in an equivalent spin for which a change in value is allowed is not inverted either.

By the enable signal generation process as described above, appropriate enable signals are obtained.

FIG. 9 is a flowchart illustrating a flow of an example of the enable signal generation process.

The processes in steps S10 to S14 are performed in the initialization process for the data processing device 20.

Step S10: a loop process for the M equivalent spins is started. The loop process is performed while i < M + 1 is satisfied, starting from i = 1.

Step S11: the type of the equivalent spin of the identification number i is determined. For example, the control circuit 46 determines whether the equivalent spin of the identification number i is a different-value equivalent spin or is a same-value equivalent spin, based on the respective equivalent spins generated in advance and information about the types thereof.

Step S12: in a case where the equivalent spin is determined to be a different-value equivalent spin, the initial value of $En_i$ is obtained by an exclusive OR of the values of the binary variables of the identification numbers $i_1$ and $i_2$ included in the equivalent spin of the identification number i.

Step S13: in a case where the equivalent spin is determined to be a same-value equivalent spin, the initial value of $En_i$ is obtained by an exclusive NOR of the value of the binary variables of the identification numbers $i_1$ and $i_2$.

The processes in steps S12 and S13 are performed by the control circuit 46 performing a logical operation of an exclusive OR or an exclusive NOR on the initial values of the binary variables of the identification numbers $i_1$ and $i_2$, for example. The obtained initial value of $En_i$ is stored as table data as illustrated in FIG. 8, for example, into a memory (not illustrated) in the equivalent spin enable determination circuit 40.

Step S14: after the processes in step S12 or S13, if i < M, i is incremented by 1, and the processes starting from step S11 are repeated.

The processes in steps S15 to S25 are performed while the data processing device 20 is searching for a solution.

Step S15: the equivalent spin enable determination circuit 40 determines whether or not the value of a binary variable is to be flipped, based on the output of the transition binary variable selection circuit 37. In a case where the transition binary variable selection circuit 37 outputs the identification number of a binary variable for which a change in value is allowed, for example, the equivalent spin enable determination circuit 40 determines that the value of the binary variable is to be flipped. The equivalent spin enable determination circuit 40 performs the process in step S16 if it is determined that the value of the binary variable is to be flipped, and performs the process in step S20 if it is determined that the value of the binary variable is not to be flipped.

Step S16: a loop process for the M equivalent spins is started. The loop process is performed while i < M + 1 is satisfied, starting from i = 1.

Step S17: the equivalent spin enable determination circuit 40 determines whether or not the binary variable to be flipped is included in one of the M equivalent spins. For example, the equivalent spin enable determination circuit 40 can perform the above determination, based on the identification number of the binary variable output by the transition binary variable selection circuit 37 and the table data as illustrated in FIG. 8. In a case where the equivalent spin enable determination circuit 40 determines that the binary variable to be flipped is included in one of the M equivalent spins, the equivalent spin enable determination circuit 40 performs the process in step S18. In a case where the equivalent spin enable determination circuit 40 determines that the binary variable to be flipped is not included in any one of the M equivalent spins, the equivalent spin enable determination circuit 40 performs the process in step S19.

Step S18: the equivalent spin enable determination circuit 40 inverts the value of $En_i$.

Step S19: after the process in step S17 or step S18, if i < M, i is incremented by 1, and the processes starting from step S17 are repeated.

Step S20: the equivalent spin enable determination circuit 40 determines whether or not the value of an equivalent spin is to be flipped, based on the output of the equivalent spin decoder circuit 38. For example, in a case where the equivalent spin decoder circuit 38 outputs the identification numbers of the two binary variables included in an equivalent spin for which a change in value is allowed, the equivalent spin enable determination circuit 40 determines that the value of the equivalent spin is to be flipped. The equivalent spin enable determination circuit 40 performs the process in step S21 if it is determined that the value of the equivalent spin is to be flipped, and performs the process in step S25 if it is determined that the value of the equivalent spin is not to be flipped.

Step S21: a loop process for the M equivalent spins is started. The loop process is performed while i < M + 1 is satisfied, starting from i = 1.

Step S22: the equivalent spin enable determination circuit 40 determines whether or not one of the two binary variables included in an equivalent spin to be flipped is included in another equivalent spin. For example, the equivalent spin enable determination circuit 40 can perform the above determination, based on the identification numbers of two binary variables output by the equivalent spin decoder circuit 38 and the table data as illustrated in FIG. 8. In a case where the equivalent spin enable determination circuit 40 determines that one of the two binary variables included in an equivalent spin to be flipped is included in another equivalent spin, the equivalent spin enable determination circuit 40 performs the process in step S23. In a case where the equivalent spin enable determination circuit 40 determines that either one of the two binary variables included in an equivalent spin to be flipped is not included in another equivalent spin, the equivalent spin enable determination circuit 40 performs the process in step S24.

Step S23: the equivalent spin enable determination circuit 40 inverts the value of $En_i$.

Step S24: after the process in step S22 or step S23, if i < M, i is incremented by 1, and the processes starting from step S22 are repeated.

Step S25: the control circuit 46 determines whether or not a predetermined termination condition for the process of searching for a solution is satisfied. In a case where it is determined that the predetermined termination condition is satisfied, the process of searching for a solution is ended. In a case where it is determined that the predetermined termination condition is not satisfied, the processes starting from step S15 are repeated.

Note that the order of the processes illustrated in FIG. 9 is an example, and the order of the processes may be changed as appropriate.

(Example of an Overall Operation of the Data Processing Device 20)

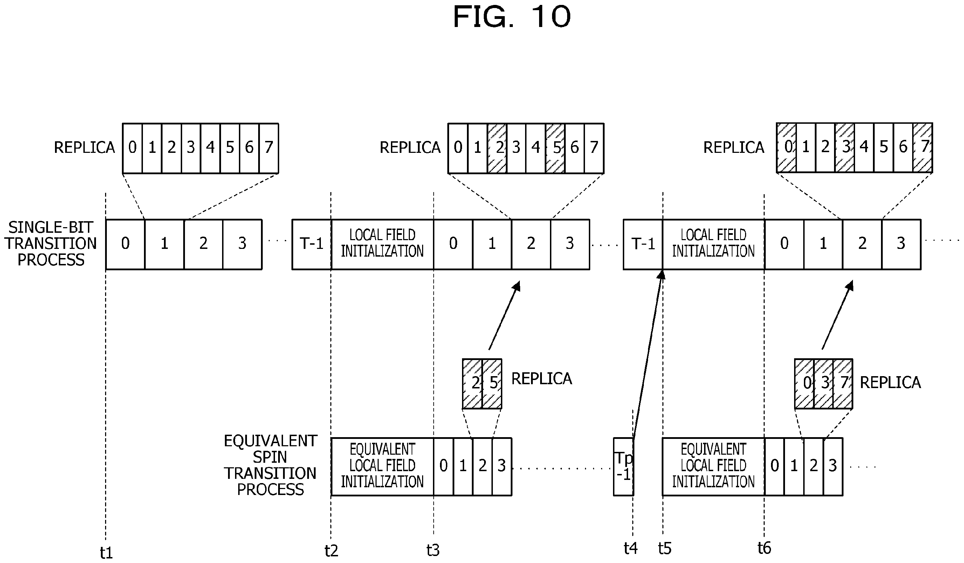

FIG. 10 is a timing chart illustrating an example of an overall operation of the data processing device according to the first embodiment.

FIG. 10 illustrates an example in which a single-bit transition process or an equivalent spin transition process is performed with a maximum of eight replicas. The single-bit transition process is repeated T times per unit process, and the equivalent spin transition process is repeated Tp times per unit process. The eight replicas are Ising models, each of which is represented by the same evaluation function. The same equivalent spins are used for the eight replicas. A process for each replica may be performed by a pipeline process in the data processing device 20 as illustrated in FIG. 7.

From timing t1 to timing t2, the single-bit transition process is performed. When the single-bit transition process is completed for the T-th time (timing t2), an initialization process for the local fields and the equivalent local fields is performed between timings t2 and t3. During the initialization process for the local fields and the equivalent local fields, the repetitive processes of the single-bit transition process and the equivalent spin transition process are stopped.

When the initialization process for the local fields and the equivalent local fields comes to an end (timing t3), in the example in FIG. 10, the equivalent spin transition process is performed on the replicas of replica numbers 2 and 5 (from timing t3 to timing t4). On the other hand, for the replicas of replica numbers 0, 1, 3, 4, 6, and 7, on which the equivalent spin transition process has not been performed, the single-bit transition process is performed in parallel with the equivalent spin transition process for the replicas of replica numbers 2 and 5.

It is assumed that a change in the value of the equivalent spin of the replica of replica number 2 or replica number 5 is allowed in the equivalent spin transition process. At this point of time, the values of the two binary variables included in the equivalent spin of the replica of replica number 2 or replica number 5 held in the binary variable holding circuit 32 are also updated. Further, the N local fields of each of the replicas of replica number 2 or replica number 5 held in the local field holding circuit 34 are also updated twice in accordance with the updating of the values of the two binary variables. The above process of updating the replica of replica number 2 or replica number 5 is performed during the time equivalent to one repetition of the single-bit transition process.

When the equivalent spin transition process has been repeated Tp times (timing t4), and the reflection of the change in the value of the equivalent spin of the replica of replica number 2 or 5 and the like onto the side of the single-bit transition process is completed (timing t5), the initialization process for the local fields and the equivalent local fields is again performed.

When the initialization process for the local fields and the equivalent local fields comes to an end (timing t6), in the example in FIG. 10, the equivalent spin transition process is performed on the replicas of replica numbers 0, 3, and 7, while the single-bit transition process is performed on the replicas of replica numbers 1, 2, 4, 5, and 6.

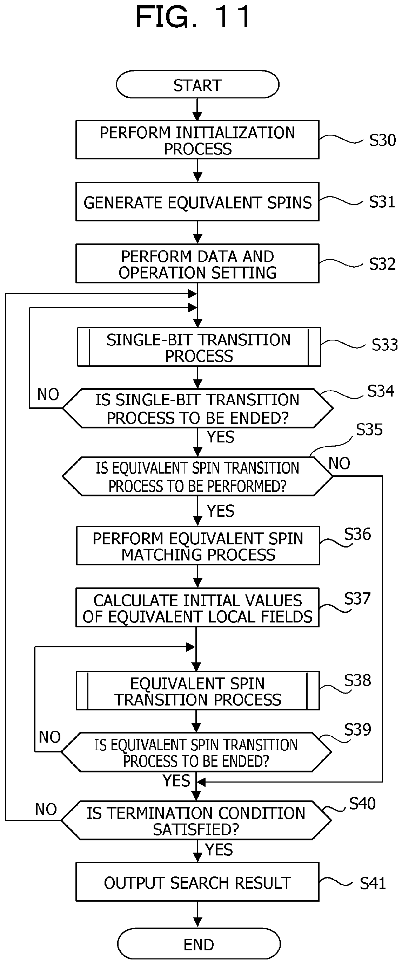

FIG. 11 is a flowchart illustrating an example of processing procedures in the entire data processing device according to the first embodiment.

Step S30: an initialization process is performed under the control of the control circuit 46. In the initialization process, generation of initial values of N binary variables, calculation of an initial value of the evaluation function, initial values of local fields, and the like are performed.

Step S31: the control circuit 46 generates M equivalent spins. For example, as described with reference to FIG. 3, when a solution to the knapsack problem is searched for, the control circuit 46 may set two binary variables corresponding to two items having close weights to each other as one equivalent spin. Further, as described with reference to FIG. 5, the control circuit 46 may preferentially set a binary variable group having many inequality constraints that contribute in common as an equivalent pair.

Furthermore, in the process in step S31, the control circuit 46 performs equivalent coupling coefficient calculation, the enable signal initial value calculation illustrated in FIG. 9, and the like.

Step S32: the control circuit 46 performs data/operation setting. For example, in the process in step S32, the control circuit 46 sets the initial values of the N binary variables in the binary variable holding circuit 32, sets the initial values of the N local fields in the local field holding circuit 34, and sets the initial value of the evaluation function in the E update holding circuit 43 and the minimum value update holding circuit 45. Also, the control circuit 46 sets the initial values of the M equivalent spins in the equivalent spin holding circuit 23, and stores the $M \times M$ equivalent coupling coefficients into the equivalent coupling coefficient memory 21. Further, the control circuit 46 sets table data related to enable signals as illustrated in FIG. 8, in the equivalent spin enable determination circuit 40.

Also, the control circuit 46 sets an operating conditions such as a solution search termination condition, for example, as an operation setting. In a case where a simulated annealing method is implemented as the MCMC method, the start value and the end value of the temperature parameter, the value by which the temperature parameter is to be multiplied for each predetermined temperature change period, and the like are set, for example. In a case where a replica exchange method is implemented as the MCMC method, setting of a value of the temperature parameter to each replica, setting of a replica exchange cycle, and the like are performed, for example.

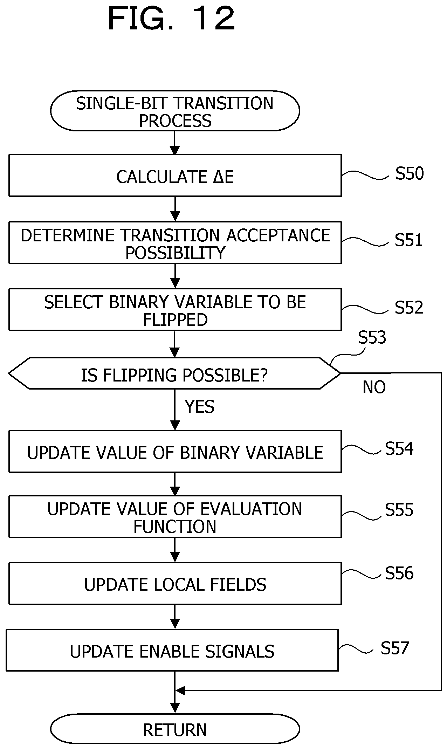

Step S33: a single-bit transition process is performed under the control of the control circuit 46. An example of the procedures in the single-bit transition process will be described later (see FIG. 12).

Step S34: the control circuit 46 determines whether or not to end the single-bit transition process. For example, in a case where the single-bit transition process has been repeated a predetermined number of times, the control circuit 46 determines to end the single-bit transition process. In a case where it is determined that the single-bit transition process is to be ended, the process in step S35 is performed. In a case where it is determined that the single-bit transition process is not to be ended, the process in step S33 is repeated.

Step S35: the control circuit 46 determines whether or not to perform an equivalent spin transition process. For example, in a case where a change in the value of a binary variable is not accepted over a predetermined period of time in the single-bit transition process, there is a possibility that the solution fits into a local solution, and therefore, the control circuit 46 determines to perform the equivalent spin transition process. In a case where it is determined that the equivalent spin transition process is to be performed, the process in step S36 is performed. In a case where it is determined that the equivalent spin transition process is not to be performed, the process in step S40 is performed.

Step S36: the control circuit 46 performs a matching process to match the values of the M equivalent spins held in the equivalent spin holding circuit 23 with the values of the N binary variables held in the binary variable holding circuit 32.

Step S37: the initial equivalent local field calculation circuit 41 calculates the initial values of the equivalent local fields expressed by Expression (17) or Expression (18), for example, using the values of the binary variables, the coupling coefficients, and the local fields. The calculated initial values of the equivalent local fields are held in the equivalent local field holding circuit 25.

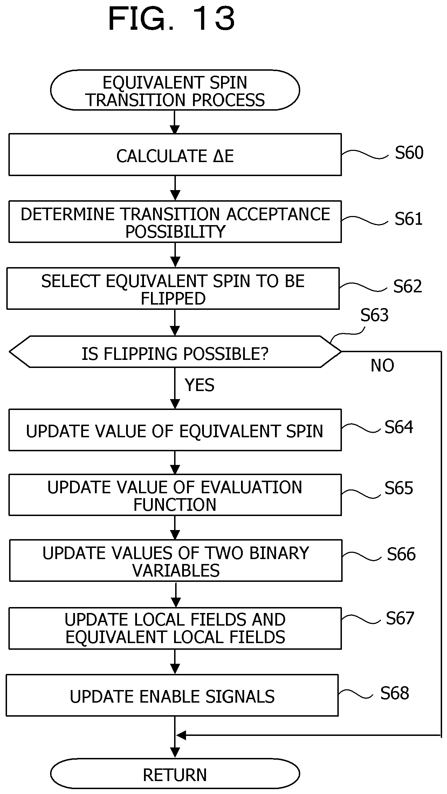

Step S38: the equivalent spin transition process is performed under the control of the control circuit 46. An example of the procedures in the equivalent spin transition process will be described later (see FIG. 13).

Step S39: the control circuit 46 determines whether or not to end the equivalent spin transition process. For example, the control circuit 46 determines to end the equivalent spin transition process, in a case where the equivalent spin transition process has been repeated a predetermined number of times. In a case where it is determined that the equivalent spin transition process is to be ended, the process in step S40 is performed. In a case where it is determined that the equivalent spin transition process is not to be ended, the process in step S38 is repeated.

Note that, in a case where a simulated annealing method is implemented as the MCMC method, the control circuit 46 decreases the value of the above-mentioned temperature parameter according to a predetermined temperature parameter change schedule, while the single-bit transition process or the equivalent spin transition process is repeated. Thus, the threshold to be used by the transition equivalent spin selection circuit 29 and the transition binary variable selection circuit 37 is updated.

In a case where a replica exchange method is implemented as the MCMC method, the single-bit transition process or the equivalent spin transition process is repeated for each replica in a plurality of replicas in which respective different temperature parameter values are set. The control circuit 46 performs a replica exchange every time the process has been repeated a predetermined number of times. For example, the control circuit 46 randomly selects two replicas from the plurality of replicas. The control circuit 46 then performs a temperature parameter value exchange between the selected two replicas, with a predetermined exchange probability based on a difference in the value of the evaluation function or a difference in the value of the temperature parameter between the replicas. Instead of the temperature parameter value exchange, the control circuit 46 may perform an exchange of the values of the N binary variables or the values of the M equivalent spins, between the two selected replicas.

Step S40: the control circuit 46 determines whether or not a predetermined solution search termination condition is satisfied. In a case where it is determined that the solution search termination condition is satisfied, the process in step S41 is performed. In a case where it is determined that the solution search termination condition is not satisfied, the processes starting from step S33 are repeated.

Step S41: a search result of the solution search is output, under the control of the control circuit 46. After that, the search process comes to an end. In the process in step S41, when the termination condition is satisfied, for example, the values of the N binary variables held in the minimum value update holding circuit 45 are output as a solution to the combinatorial optimization problem. The control circuit 46 may cause a display device (not illustrated) to display the solution, or may cause a communication circuit (not illustrated) to transmit the solution to an external device.

(Processing Procedures in the Single-Bit Transition Process)

FIG. 12 is a flowchart illustrating an example of the processing procedures in the single-bit transition process.
Step S50: the $\Delta E$ calculation circuit 35 calculates an amount of change in the value of the evaluation function for each of the N binary variables, using the local fields held in the local field holding circuit 34.
Step S51: the transition binary variable selection circuit 37 determines whether the value of each of the N binary variables can change (a transition acceptance possibility), based on the amounts of change in the value of the evaluation function, which have been calculated for the respective N binary variables, for example.
Step S52: in a case where changes in the values of a plurality of binary variables are allowed, the transition binary variable selection circuit 37 selects one binary variable randomly or in accordance with a predetermined rule.
Step S53: the control circuit 46 determines whether the value of the binary variable can be flipped, based on an output from the transition binary variable selection circuit 37. In a case where it is determined that flipping is possible, the process in step S54 is performed. In a case where it is determined that flipping is not possible, a repetition of the single-bit transition process comes to an end.
Step S54: the binary variable updating circuit 31 updates the value of the binary variable selected by the transition binary variable selection circuit 37.
Step S55: The E update holding circuit 43 updates the value of the evaluation function, using the amount of change in the evaluation function output by the transition binary variable selection circuit 37.
Step S56: the local field updating circuit 33 updates the N local fields, using one coupling coefficient of the plurality of coupling coefficients read from the coupling coefficient memory 30 based on the identification number output from the transition binary variable selection circuit 37.
Step S57: the equivalent spin enable determination circuit 40 updates the enable signals, according to the process illustrated in FIG. 9.
As a result, a repetition of the single-bit transition process comes to an end.

(Processing Procedures in the Equivalent Spin Transition Process)

FIG. 13 is a flowchart illustrating an example of the processing procedures in the equivalent spin transition process.
Step S60: the $\Delta E$ calculation circuit 26 calculates an amount of change in the value of the evaluation function for each of the M equivalent spins, using the equivalent local fields held in the equivalent local field holding circuit 25.
Step S61: the transition equivalent spin selection circuit 29 determines whether the value of each of the equivalent spins having 1 as the enable signal can change (a transition acceptance possibility), based on the amounts of change in the value of the evaluation function, which have been calculated for the respective M equivalent spins, for example. Note that the determination as to a transition acceptance possibility is not performed for the equivalent spins having 0 as the enable signal.
Step S62: in a case where changes in the values of a plurality of equivalent spins are allowed, the transition equivalent spin selection circuit 29 may select one equivalent spin randomly or in accordance with a predetermined rule.
Step S63: the control circuit 46 determines whether the value of the equivalent spin can be flipped, based on an output from the transition equivalent spin selection circuit 29. In a case where it is determined that flipping is possible, the process in step S64 is performed. In a case where it is determined that flipping is not possible, a repetition of the equivalent spin transition process comes to an end.
Step S64: the equivalent spin updating circuit 22 updates the value of the equivalent spin selected by the transition equivalent spin selection circuit 29.
Step S65: The E update holding circuit 43 updates the value of the evaluation function, using the amount of change in the evaluation function output by the transition equivalent spin selection circuit 29.
Step S66: the binary variable updating circuit 31 updates the values of the two binary variables included in the equivalent spin selected by the transition equivalent spin selection circuit 29.

Step S67: the local field updating circuit 33 updates the N local fields twice, using one coupling coefficient of the plurality of coupling coefficients read from the coupling coefficient memory 30 based on two identification numbers output from the equivalent spin decoder circuit 38. Further, the equivalent local field updating circuit 24 updates the M equivalent local fields, using one equivalent coupling coefficient of the plurality of equivalent coupling coefficients read from the equivalent coupling coefficient memory 21 based on the identification number output from the transition equivalent spin selection circuit 29.

Step S68: the equivalent spin enable determination circuit 40 updates the enable signals, according to the process illustrated in FIG. 9.

As a result, a repetition of the equivalent spin transition process comes to an end.

Note that the order of the processes illustrated in FIGs. 11 to 13 is an example, and the order of the processes may be changed as appropriate.

As described above, the equivalent spin holding circuit 23 of the data processing device 20 holds a representative value (the value of an equivalent spin) that is one value of two or more binary variables of each variable group of a plurality of variable groups (equivalent spins) each formed with two binary variables of different values or the same values included in the evaluation function. Also, the equivalent coupling coefficient memory 21 stores a plurality of equivalent coupling coefficients indicating the magnitudes of interactions among the respective equivalent spins. Meanwhile, the equivalent local field holding circuit 25 holds equivalent local fields to be used for specifying a first amount of change to be caused in the value of the evaluation function by a change in the value of each equivalent spin of a plurality of equivalent spins. The $\Delta E$ calculation circuit 26 calculates the first amount of change for each equivalent spin of the plurality of equivalent spins, using equivalent local fields. Also, the transition equivalent spin selection circuit 29 accepts a change in the value of one spin among a plurality of spins, based on the above amounts of change calculated for the respective equivalent spins of the plurality of equivalent spins. The equivalent spin updating circuit 22 updates the value of equivalent spins for which a change in value is accepted, among the plurality of equivalent spins. Further, the equivalent local field updating circuit 24 updates the equivalent local fields, using the equivalent coupling coefficients read out based on the identification numbers of the equivalent spins for which a change in value has been accepted among the plurality of equivalent coupling coefficients stored in the equivalent coupling coefficient memory 21.

With such a data processing device 20, an equivalent spin formed with two binary variables can be handled as one binary variable, and accordingly, a two-bit transition process (a change in the value of an equivalent spin corresponds to a two-bit transition) can be performed by a parallel trial as in a single-bit transition process. Thus, two-bit transitions can be efficiently evaluated by parallel trials. Also, as parallel trials can be performed, search efficiency is increased, and problem-solving performance is enhanced.

Further, the data processing device 20 includes the single-bit transition circuit unit 20b that accepts a change in the value of one binary variable of a plurality of binary variables, based on the amount of change to be caused in the value of the evaluation function by a change in the value of each binary variable of a plurality of binary variables of the evaluation function including the above plurality of variable groups, and the control circuit 46. The control circuit 46 switches between the equivalent spin transition process by the equivalent spin transition circuit unit 20a and the single-bit transition process by the single-bit transition circuit unit 20b. Because of this, when the solution fits into a local solution in the single-bit transition process, it is possible to efficiently conduct a flexible search in accordance with situations, such as switching to the equivalent spin transition process.

Also, the data processing device 20 further includes the equivalent spin decoder circuit 38 that outputs identification numbers for specifying two binary variables included in the equivalent spin specified by an identification number, based on the identification number output from the transition equivalent spin selection circuit 29. The single-bit transition circuit unit 20b then updates the values of the two binary variables corresponding to those identification numbers. Thus, a change in the value of an equivalent spin in the equivalent spin transition circuit unit 20a can be reflected in the binary variables being handled by the single-bit transition circuit unit 20b.

Further, the data processing device 20 includes the equivalent spin enable determination circuit 40 as described above. The equivalent spin enable determination circuit 40 generates enable signals indicating whether or not changes in the values of a plurality of equivalent spins are allowed. In a case where the single-bit transition circuit unit 20b accepts a change in the value of a certain binary variable among a plurality of binary variables, the equivalent spin enable determination circuit 40 inverts the value of the enable signal related to the equivalent spin including the binary variable among the plurality of equivalent spins. Thus, it is possible to match the binary variables being handled by the equivalent spin transition circuit unit 20a with different-value or same-value equivalent spins being handled by the single-bit transition circuit unit 20b.

Also, the data processing device 20 includes the initial equivalent local field calculation circuit 41. The initial equivalent local field calculation circuit 41 calculates initial values of the equivalent local fields, using the values of the plurality of binary variables and the plurality of coupling coefficients and the local fields obtained by the processes performed by the single-bit transition circuit unit 20b. Thus, an equivalent spin transition process reflecting the result of the single-bit transition process becomes possible.

Note that the data processing device 20 can cope with a transition process of three or more bits, using equivalent spins each including three or more binary variables. In that case, the mathematical formulas for calculating equivalent coupling coefficients and equivalent local fields are changed as appropriate.

For example, the data processing device 20 first calculates an equivalent coupling coefficient and an equivalent local field of an equivalent spin formed with two binary variables of different values or the same values among three binary variables. After that, the data processing device 20 regards this equivalent spin as one binary variable, and calculates equivalent coupling coefficients and equivalent local fields with the other binary variables, to obtain an equivalent spin formed with three binary variables.

Such a data processing device 20 may be expected to be useful as a technique for obtaining an accurate solution at high speed, when solving various problems in modern society that can be transformed into a combinatorial optimization problem.

(Second Embodiment)

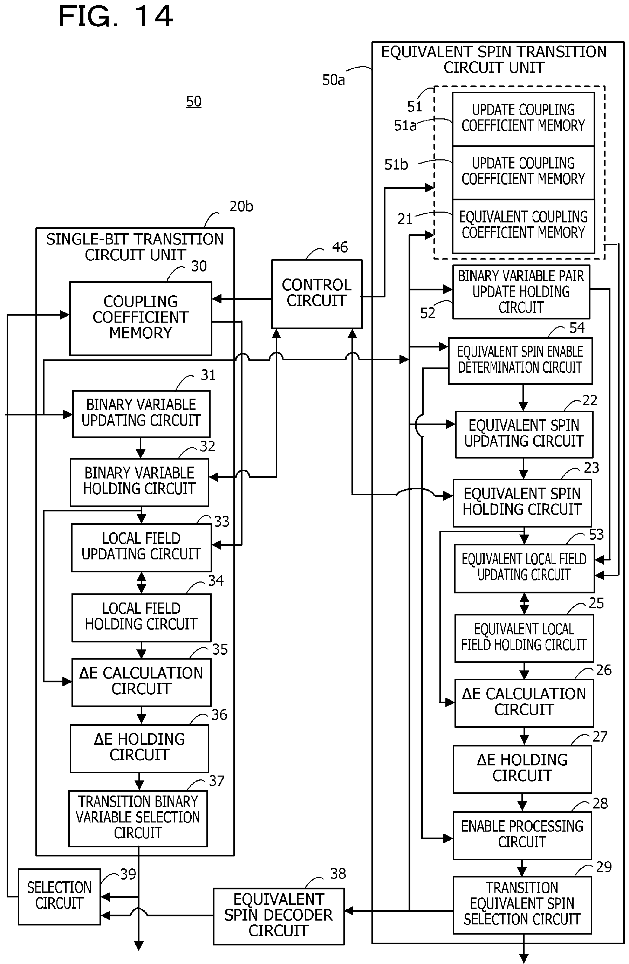

FIG. 14 is a diagram illustrating an example of a data processing device according to a second embodiment. In FIG. 14, the same elements as those of the data processing device 20 illustrated in FIG. 7 are denoted by the same reference signs as those used in FIG. 7. Note that, in FIG. 14, the $\Delta E$ selection circuit 42, the E update holding circuit 43, the comparison circuit 44, and the minimum value update holding circuit 45 illustrated in FIG. 7 are not illustrated.

A data processing device 50 according to the second embodiment has a function of causing the value of an equivalent spin and an equivalent local field to reflect a change in the value of a binary variable, every time such a change in the value of a binary variable occurs during a single-bit transition process.

In the data processing device 50 of the second embodiment, an equivalent spin transition circuit unit 50a differs from the equivalent spin transition circuit unit 20a of the data processing device 20 of the first embodiment.

The equivalent spin transition circuit unit 50a includes an equivalent coupling coefficient memory 21, a memory unit 51 including update coupling coefficient memories 51a and 51b, and a binary variable pair update holding circuit 52.

The update coupling coefficient memories 51a and 51b store a plurality of coupling coefficients related to the binary variables included in M equivalent spins, among N × N coupling coefficients.

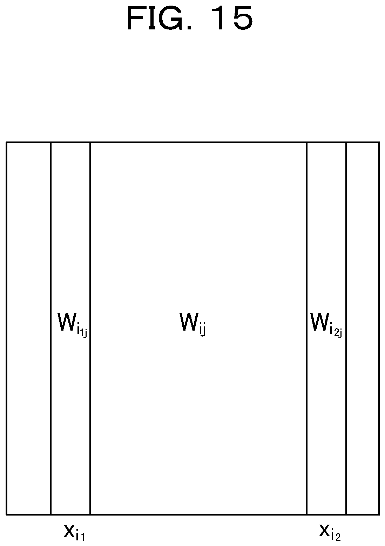

FIG. 15 is a diagram for explaining coupling coefficients stored in an update coupling coefficient memory.

The update coupling coefficient memory 51a stores coupling coefficients indicating the magnitudes of interactions between the binary variable having an identification number $i_1$ and the other binary variables, among N binary variables. The update coupling coefficient memory 51b stores coupling coefficients indicating the magnitudes of interactions between the binary variable having an identification number $i_2$ and the other binary variables, among the N binary variables.

These coupling coefficients are used when the equivalent local fields are updated in accordance with a change caused in the value of a binary variable during the single-bit transition process.

The binary variable pair update holding circuit 52 holds each two binary variables (each binary variable pair) included in the respective M equivalent spins. Further, the binary variable pair update holding circuit 52 updates the values of the binary variables corresponding to one or two identification numbers output from the selection circuit 39, among the held binary variables. Further, the binary variable pair update holding circuit 52 outputs the amount of change caused in the value of a binary variable during the single-bit transition process.

An equivalent local field updating circuit 53 updates the equivalent local fields in accordance with a change in the value of an equivalent spin, like the equivalent local field updating circuit 24 of the data processing device 20 of the first embodiment.

Further, the equivalent local field updating circuit 53 updates the equivalent local fields in accordance with a change caused in the value of a binary variable due to the single-bit transition process. The equivalent local field updating circuit 53 updates the equivalent local fields held in the equivalent local field holding circuit 25, using the coupling coefficient read from the update coupling coefficient memories 51a and 51b based on the identification number a binary variable selected by the selection circuit 39 at the time of the single-bit transition process. Where the identification number selected at this point of time is j, the equivalent local fields are updated based on the following Expression (21).

[Math. 21]

$$\hat{h}_i \rightarrow \hat{h}_i + (W_{i_1 j} + W_{i_2 j})\Delta x_j \qquad (21)$$

An equivalent spin enable determination circuit 54 performs the process as illustrated in FIG. 9 like the equivalent spin enable determination circuit 40 of the data processing device 20 of the first embodiment, based on one or two identification numbers output from the selection circuit 39.

(Example of an Overall Operation of the Data Processing Device 50)

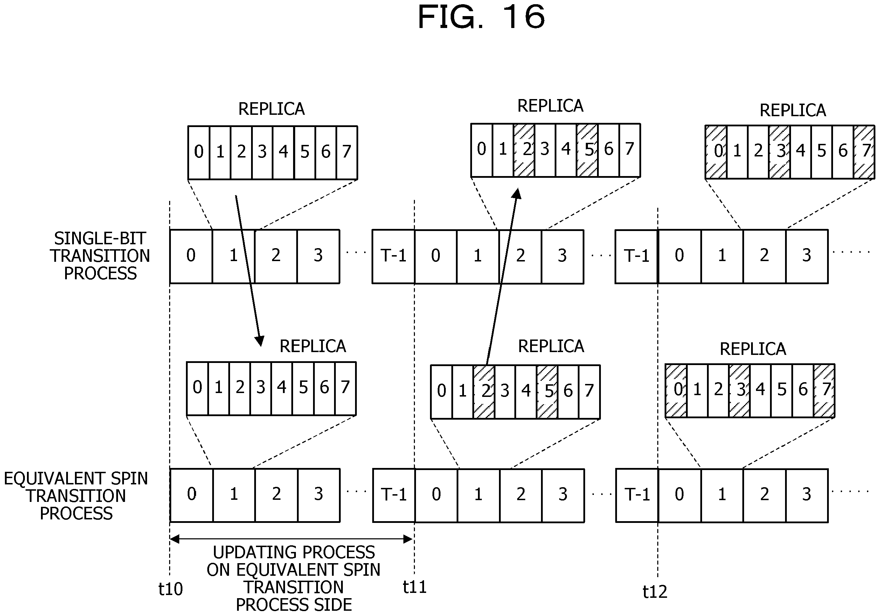

FIG. 16 is a timing chart illustrating an example of an overall operation of the data processing device according to the second embodiment.

FIG. 16 illustrates an example in which a single-bit transition process or an equivalent spin transition process is performed with a maximum of eight replicas. Each of the single-bit transition process and the equivalent spin transition process is repeated T times per unit process. A process for each replica may be performed by a pipeline process in the data processing device 50 as illustrated in FIG. 14.

From timing t10 to timing t11, the single-bit transition process is performed. On the equivalent spin transition process side, the values of the binary variables included in the equivalent spin and the M equivalent local fields are updated in accordance with the change caused in the value of a binary variable due to the single-bit transition process. However, the equivalent spin transition process has not actually been performed.

When the single-bit transition process is completed for the T-th time (timing t11), the initialization process for the local fields and the equivalent local fields is not performed, but the next unit process (from timing t11 to timing t12) is performed.

In the example in FIG. 16, from timing t11 to timing t12, the equivalent spin transition process is performed on the replicas of replica numbers 2 and 5. On the other hand, for the replicas of replica numbers 0, 1, 3, 4, 6, and 7, on which the equivalent spin transition process has not been performed, the single-bit transition process is performed in parallel with the equivalent spin transition process for the replicas of replica numbers 2 and 5.

When a change in the value of the equivalent spin of the replica of replica numbers 2 or 5 is allowed in the equivalent spin transition process, the values of the two binary variables included in the equivalent spin of the replica of replica number 2 or 5 held in the binary variable holding circuit 32 are also updated. The updating of the values of the two binary variables of the replica of replica number 2 or 5 can be performed during one repetition of the single-bit transition process. Likewise, the values of the two binary variables included in the equivalent spin of the replica of replica number 2 or 5 held in the binary variable pair update holding circuit 52 are also updated.

Among the binary variables of the replicas of replica numbers 0, 1, 3, 4, 6, and 7 held in the binary variable pair update holding circuit 52, those whose values have changed due to the single-bit transition process are updated. Also, in conjunction with the updating, the equivalent local fields are also updated.

In the example in FIG. 16, as the next unit process (timing t12 and later), the equivalent spin transition process is performed on the replicas of replica numbers 0, 3, and 7, while the single-bit transition process is performed on the replicas of replica numbers 1, 2, 4, 5, and 6.

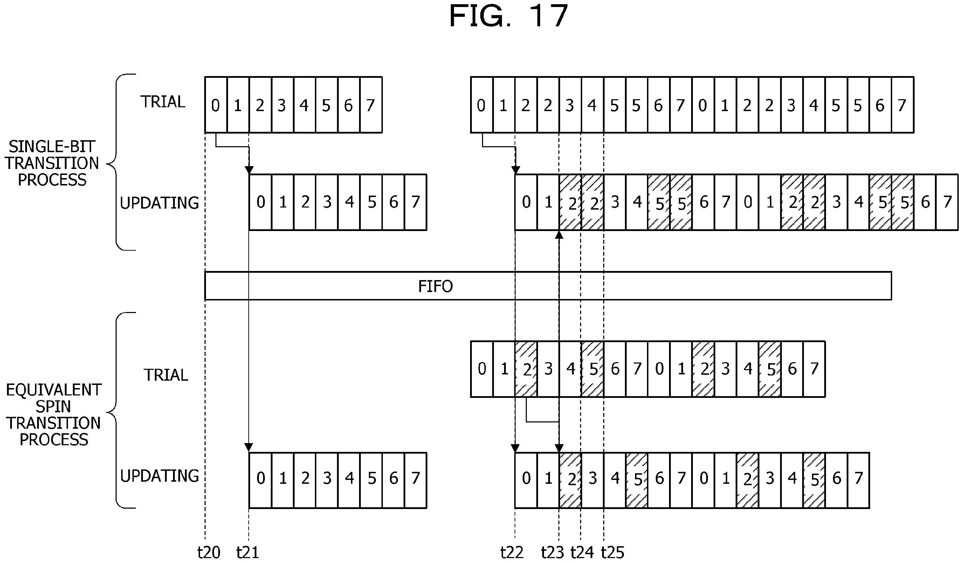

FIG. 17 is a timing chart illustrating an example of processing timings in an updating process. Note that FIG. 17 illustrates a first in first out (FIFO) for adjusting the processing timings.

A trial (such as determination as to a transition acceptance possibility) in the single-bit transition process is performed (timing t20), and, in a case where there is a binary variable for which a change in value is allowed, the value of the binary variable and the N local fields are updated (timing t21). At this point of time, on the equivalent spin transition process side, the values of the binary variables included in the equivalent spin and the M equivalent local fields are also updated in accordance with the change caused in the value of a binary variable due to the single-bit transition process.

In a case where there is an equivalent spin for which a change in value is allowed in a trial (timing t22) in the equivalent spin transition process, the value of the equivalent spin and the M equivalent local fields are updated (timing t23 to timing t24). At this point of time, on the single-bit transition processing side, the values of the two binary variables included in the equivalent spin, and the N local fields are also updated (from timing t23 to timing t25).

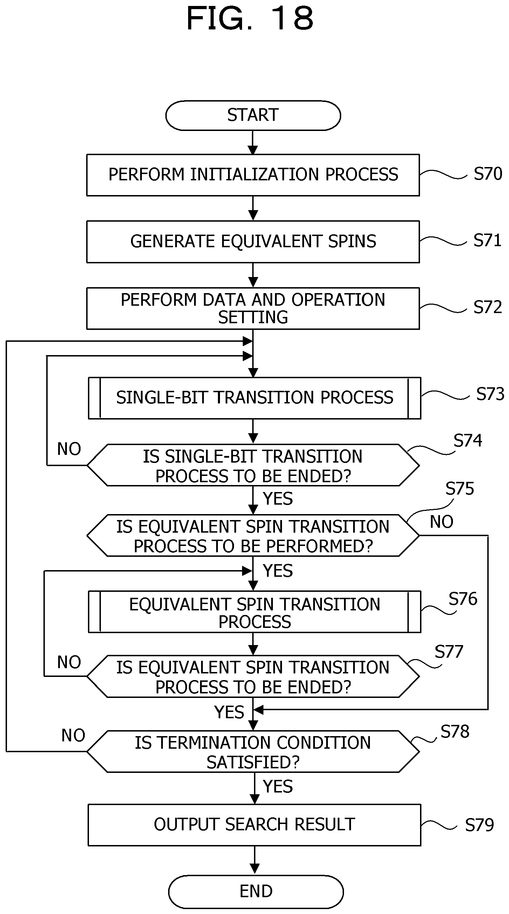

FIG. 18 is a flowchart illustrating an example of processing procedures in the entire data processing device according to the second embodiment.

The processes in steps S70 to S72 are the same as the processes in steps S30 to S32 illustrated in FIG. 11.

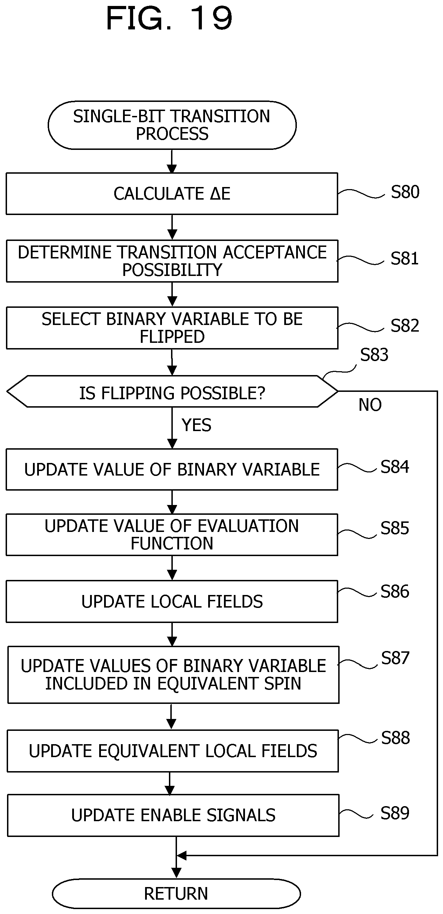

Step S73: a single-bit transition process is performed under the control of the control circuit 46. An example of the procedures in the single-bit transition process will be described later (see FIG. 19).

Step S74: the control circuit 46 determines whether or not to end the single-bit transition process. For example, in a case where the single-bit transition process has been repeated a predetermined number of times, the control circuit 46 determines to end the single-bit transition process. In a case where it is determined that the single-bit transition process is to be ended, the process in step S75 is performed. In a case where it is determined that the single-bit transition process is not to be ended, the process in step S73 is repeated.

Step S75: the control circuit 46 determines whether or not to perform an equivalent spin transition process. In a case where it is determined that the equivalent spin transition process is to be performed, the process in step S76 is performed. In a case where it is determined that the equivalent spin transition process is not to be performed, the process in step S78 is performed.

The processes in steps S76 to S79 are the same as the processes in steps S38 to S41 illustrated in FIG. 11.

(Processing Procedures in the Single-Bit Transition Process)

FIG. 19 is a flowchart illustrating an example of processing procedures in the single-bit transition process in the data processing device according to the second embodiment.

The processes in steps S80 to S86 are the same as the processes in steps S50 to S56 illustrated in FIG. 12.

Step S87: the binary variable pair update holding circuit 52 updates the value of the binary variable whose value changes during the single-bit transition process, among the binary variables included in the held equivalent spins.

Step S88: the equivalent local field updating circuit 53 updates the equivalent local fields in accordance with the change caused in the value of the binary variable due to the single-bit transition process.

Step S89: the equivalent spin enable determination circuit 54 updates the enable signals in accordance with the change caused in the value of the binary variable in the process in step S87. As a result, a repetition of the single-bit transition process comes to an end.

Note that the order of the processes illustrated in FIGs. 18 and 19 is an example, and the order of the processes may be changed as appropriate.

With the data processing device 50 of the second embodiment as described above, effects similar to those of the data processing device 20 of the first embodiment can be achieved. Further, the equivalent spin transition circuit unit 50a includes the update coupling coefficient memories 51a and 51b that store a plurality of coupling coefficients related to the binary variables included in equivalent spins, among a plurality of coupling coefficients. When the single-bit transition circuit unit 20b accepts a change in the value of a certain binary variable among a plurality of binary variables, the equivalent local field updating circuit 53 then updates the equivalent local fields, using the amount of change in the value of the binary variable and one coupling coefficient of the plurality of coupling coefficients to which the binary variable is related. Because of this, the initialization process for the equivalent local fields at a time when the single-bit transition process is switched to the equivalent spin transition process becomes unnecessary.

(Third Embodiment)

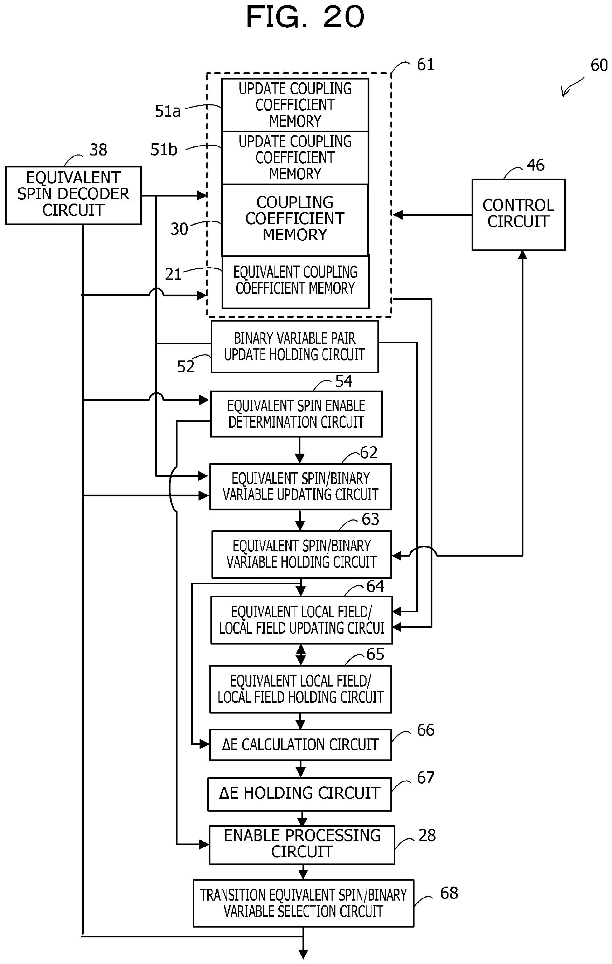

FIG. 20 is a diagram illustrating an example of a data processing device according to a third embodiment. In FIG. 20, the same elements as those of the data processing device 50 illustrated in FIG. 14 are denoted by the same reference signs as those used in FIG. 14. Note that, in FIG. 20, the E update holding circuit 43, the comparison circuit 44, and the minimum value update holding circuit 45 illustrated in FIG. 7 are not illustrated.

A data processing device 60 according to the third embodiment is obtained by integrating some of the circuits of the equivalent spin transition circuit unit 50a and some of the circuits of the single-bit transition circuit unit 20b illustrated in FIG. 14.

The data processing device 60 includes a memory unit 61 including an equivalent coupling coefficient memory 21, a coupling coefficient memory 30, and update coupling coefficient memories 51a and 51b, an equivalent spin/binary variable updating circuit 62, and an equivalent spin/binary variable holding circuit 63. Further, the data processing device 60 includes an equivalent local field/local field updating circuit 64, an equivalent local field/local field holding circuit 65, a $\Delta E$ calculation circuit 66, a $\Delta E$ holding circuit 67, and a transition equivalent spin/binary variable selection circuit 68.

The equivalent spin/binary variable updating circuit 62 is obtained by integrating the equivalent spin updating circuit 22 and the binary variable updating circuit 31 illustrated in FIG. 14.

The equivalent spin/binary variable holding circuit 63 is a combination of the equivalent spin holding circuit 23 and the binary variable holding circuit 32 illustrated in FIG. 14. That is, the equivalent spin/binary variable holding circuit 63 holds the values of M equivalent spins and the values of N binary variables.

The equivalent local field/local field updating circuit 64 is obtained by integrating the equivalent local field updating circuit 53 and the local field updating circuit 33 illustrated in FIG. 14.

The equivalent local field/local field holding circuit 65 is a combination of the equivalent local field holding circuit 25 and the local field holding circuit 34 illustrated in FIG. 14. That is, the equivalent local field/local field holding circuit 65 holds M equivalent local fields and N local fields.

The $\Delta E$ calculation circuit 66 is obtained by integrating the $\Delta E$ calculation circuits 26 and 35 illustrated in FIG. 14.

The $\Delta E$ holding circuit 67 is a combination of the $\Delta E$ holding circuits 27 and 36 illustrated in FIG. 14. That is, the $\Delta E$ holding circuit 67 holds the amounts of change to be caused in the evaluation function by changes in the values of the respective M equivalent spins, and the amounts of change to be caused in the value of the evaluation function by changes in the values of the respective N binary variables.

The transition equivalent spin/binary variable selection circuit 68 is obtained by integrating the transition equivalent spin selection circuit 29 and the transition binary variable selection circuit 37 illustrated in FIG. 14.

(Example of an Overall Operation of the Data Processing Device 60)

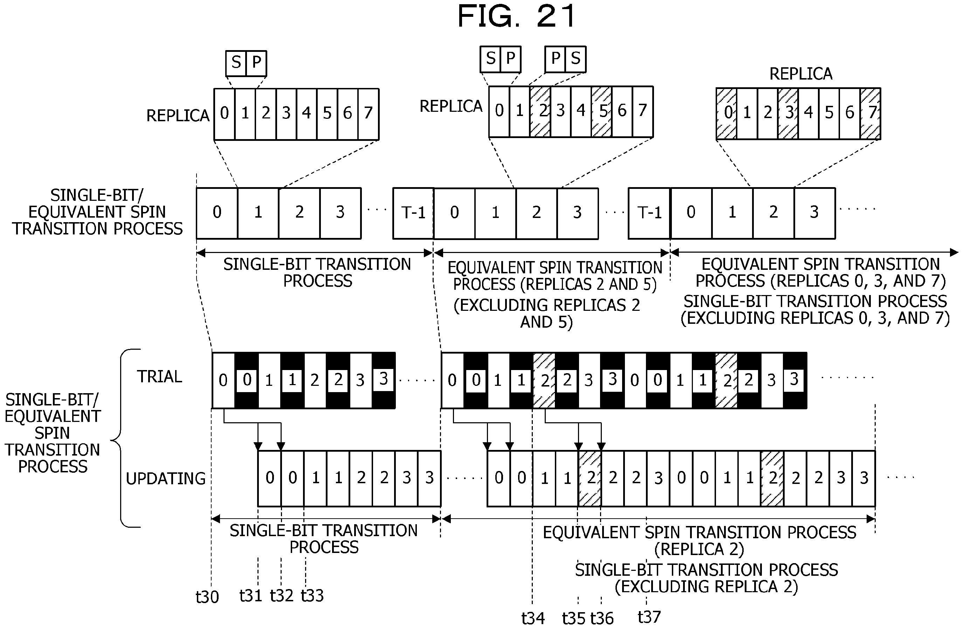

FIG. 21 is a timing chart illustrating an example of an overall operation of the data processing device according to the third embodiment.

In the data processing device 60 of the third embodiment, an updating process in a single-bit transition process and an updating process in an equivalent spin transition process are performed in a time-division manner. As in the timing chart illustrated in FIG. 16, the single-bit transition process or equivalent spin transition process is performed with a maximum of eight replicas in FIG. 21.

In the example in FIG. 21, in the first unit process, the single-bit transition process is performed on all replicas. In the second unit process, the equivalent spin transition process is performed on the replicas of replica numbers 2 and 5, and the single-bit transition process is performed on the other replicas. In the third unit process, the equivalent spin transition process is performed on the replicas of replica numbers 0, 3, and 7, and the single-bit transition process is performed on the other replicas. "S" represents the processing related to the single-bit transition process, and "P" represents the processing related to an equivalent spin.

In the first unit process, a trial (such as determination as to a transition acceptance possibility) in the single-bit transition process is performed (timing t30), and, in a case where there is a binary variable for which a change in value is allowed, the value of the binary variable and the N local fields are updated (from timing t31 to timing t32). Further, on the equivalent spin transition process side, the values of the binary variables included in the equivalent spin and the M equivalent local fields are also updated (from timing t32 to timing t33) in accordance with the change caused in the value of a binary variable due to the single-bit transition process. Note that the periods in black represent idling periods.

In the second unit process, the updating process accompanying a change in the value of a binary variable in the single-bit transition process is performed in the same manner as in the first unit process. In a case where there is an equivalent spin for which a change in value is allowed in a trial (timing t34) in the equivalent spin transition process, the value of the equivalent spin and the M equivalent local fields are updated (timing t35 to timing t36). Further, on the single-bit transition processing side, the values of the two binary variables included in the equivalent spin, and the N local fields are also updated (from timing t36 to timing t37).

With the data processing device 60 of the third embodiment as described above, effects similar to those of the data processing device 50 of the second embodiment can be achieved. Furthermore, by integrating the circuit that performs the single-bit transition process and the circuit that performs the equivalent spin transition process, the circuit amount (such as the number of arithmetic units) can be reduced.

Note that the circuit integration as described above may be adopted in the data processing device 20 of the first embodiment.

Note that the processing details (such as FIG. 9, FIGs. 11 to 13, FIG. 18, and FIG. 19, for example) of the above respective embodiments can be implemented by software causing a data processing device to execute a program.

The program can be recorded in a computer-readable recording medium. As the recording medium, a magnetic disk, an optical disc, a magneto-optical disk, a semiconductor memory, or the like can be used, for example. Examples of the magnetic disk include a flexible disk (FD) and an HDD. Examples of the optical disc include a compact disc (CD), a CD-recordable (R)/rewritable (RW), a digital versatile disc (DVD), and a DVD-R/RW. The program is sometimes recorded in a portable recording medium and is distributed. In that case, the program may be copied from the portable recording medium to another recording medium before execution.

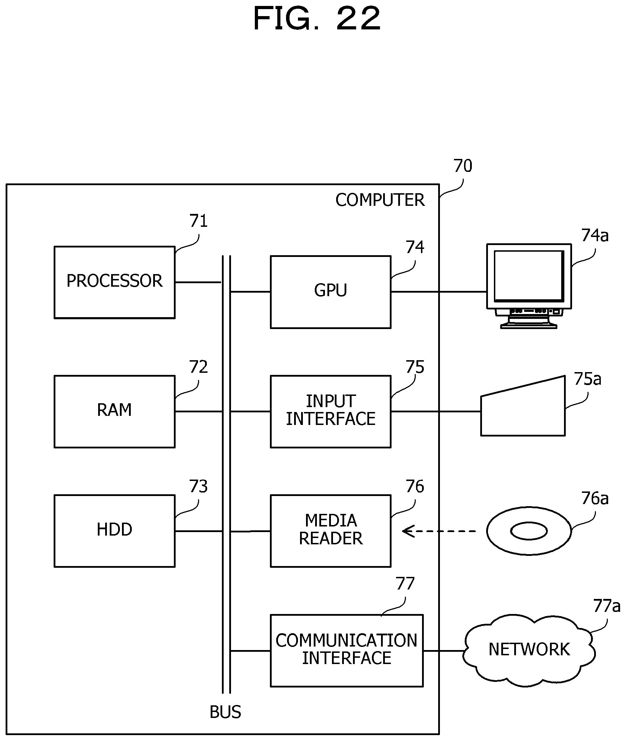

FIG. 22 is a diagram illustrating an example of the hardware of a computer that is an example of a data processing device.

A computer 70 includes a processor 71, a random access memory (RAM) 72, an HDD 73, a graphics processing unit (GPU) 74, an input interface 75, a medium reader 76, and a communication interface 77. The units mentioned above are coupled to a bus.

The processor 71 loads at least part of a program and data stored in the HDD 73 into the RAM 72, and executes the program. Note that the processor 71 may include a plurality of processor cores, for example. Also, the computer 70 may include a plurality of processors. Note that a set of the plurality of processors (multiprocessor) may be called a "processor". As the processor 71, a central processing unit (CPU), a GPU, a digital signal processor (DSP), or the like may be used.

The RAM 72 is a volatile semiconductor memory that temporarily stores a program to be executed by the processor 71 and data to be used by the processor 71 for arithmetic operations. Note that the computer 70 may include a memory of a type other than the RAM 72, or may include a plurality of memories.

The HDD 73 is a nonvolatile storage device that stores programs of software, such as an operating system (OS), middleware, and application software, and data. The programs include, for example, a program for causing the computer 70 to execute a process of searching for a solution to a combinatorial optimization problem as described above. Note that the computer 70 may include some other types of storage devices such as a flash memory and a solid state drive (SSD), or may include a plurality of nonvolatile storage devices.

The GPU 74 outputs an image (for example, an image representing a computation result or the like of a combinatorial optimization problem) to a display 74a coupled to the computer 70, in accordance with a command from the processor 71. As the display 74a, a cathode ray tube (CRT) display, a liquid crystal display (LCD), a plasma display panel (PDP), an organic electro-luminescence (OEL) display, or the like may be used.

The input interface 75 acquires an input signal from an input device 75a coupled to the computer 70, and outputs the acquired input signal to the processor 71. As the input device 75a, a pointing device such as a mouse, a touch panel, a touch pad, or a trackball, a keyboard, a remote controller, a button switch, or the like can be used. Also, a plurality of types of input devices may be coupled to the computer 70.

The medium reader 76 is a reading device that reads a program and data recorded in a recording medium 76a. As the recording medium 76a, a magnetic disk, an optical disc, a magneto-optical disk (MO), a semiconductor memory, or the like can be used, for example. Examples of the magnetic disk include an FD and an HDD. Examples of the optical disc include a CD and a DVD.

The medium reader 76 copies a program or data read from the recording medium 76a to another recording medium such as the RAM 72 or the HDD 73, for example. The read program is executed by the processor 71, for example. Note that the recording medium 76a may be a portable recording medium, and is sometimes used for distribution of a program or data. Also, the recording medium 76a and the HDD 73 are sometimes referred to as computer-readable recording media.

The communication interface 77 is an interface that is connected to a network 77a, and communicates with another information processing device via the network 77a. The communication interface 77 may be a wired communication interface coupled to a communication device such as a switch by a cable, or may be a wireless communication interface coupled to a base station by a wireless link.

While one aspect of the data processing devices, the programs, and the data processing methods according to the embodiments has been described based on the embodiments, this is merely an example and is not limited to the above description.

For example, in the above description, a state variable is assumed to have a value of 0 or 1, but a variable having a value of -1 or +1 can also be used as a state variable by appropriately transforming the mathematical formulas.

**Claims**

1. A data processing device comprising:

   a first holding circuit that holds a representative value of each variable group of a plurality of variable groups, formed with at least two binary variables of different values or equal values included in an evaluation function of a combinatorial optimization problem, and that is a value of one of the at least two binary variables;
   a first memory that stores a plurality of first coupling coefficients that indicate magnitudes of interaction between the variable groups of the plurality of variable groups;
   a second holding circuit that holds a first local field to be used to specify a first amount of change to be caused in a value of the evaluation function by a change in the representative value of each variable group of the plurality of variable groups;
   a change amount calculation circuit that calculates the first amount of change for each variable group of the plurality of variable groups, using the first local field;
   a selection circuit that accepts a change in the representative value of one variable group of the plurality of variable groups, based on the first amount of change calculated for each variable group of the plurality of variable groups;
   a first updating circuit that updates the representative value of a first variable group for which a change in the representative value is accepted, among the plurality of variable groups; and
   a second updating circuit that updates the first local field, using a second coupling coefficient that has been read, from the plurality of first coupling coefficients stored in the first memory, based on a first identification number of the first variable group.

2. The data processing device according to claim 1, further comprising:

   a first circuit unit that includes the first holding circuit, the first memory, the second holding circuit, the change amount calculation circuit, the selection circuit, the first updating circuit, and the second updating circuit;
   a second circuit unit that accepts a change in a value of one binary variable of a plurality of binary variables of the evaluation function, based on a second amount of change to be caused in the value of the evaluation function by a change in a value of each binary variable of the plurality of binary variables that includes the plurality of variable groups; and

a control circuit that switches between a process by the first circuit unit and a process by the second circuit unit.

3. The data processing device according to claim 2, further comprising

a decoder circuit that outputs at least two second identification numbers that specify the at least two binary variables included in the first variable group, based on the first identification number,
wherein the second circuit unit updates values of the at least two binary variables that correspond to the at least two second identification numbers.

4. The data processing device according to claim 2, further comprising

an enable determination circuit that generates an enable signal that indicates whether or not to allow a change in the representative values of the plurality of variable groups,
wherein, when the second circuit unit accepts a change in a value of a first binary variable among the plurality of binary variables, the enable determination circuit inverts a value of the enable signal related to a second variable group that includes the first binary variable among the plurality of variable groups.

5. The data processing device according to claim 2, wherein
the second circuit unit includes:

a third holding circuit that holds a value of each binary variable of the plurality of binary variables of the evaluation function;
a second memory that stores a plurality of third coupling coefficients that indicate magnitudes of interaction between the respective binary variables of the plurality of binary variables; and
a fourth holding circuit that holds a second local field to be used to specify the second amount of change, and
the data processing device further comprises an initial value calculation circuit that calculates an initial value of the first local field, using values of the plurality of binary variables obtained in the process by the second circuit unit, the plurality of third coupling coefficients, and the second local field.

6. The data processing device according to claim 2, wherein
the second circuit unit includes:

a third holding circuit that holds a value of each binary variable of the plurality of binary variables of the evaluation function;
a second memory that stores a plurality of third coupling coefficients that indicate magnitudes of interaction between the respective binary variables of the plurality of binary variables; and
a fourth holding circuit that holds a second local field to be used to specify the second amount of change,
the first circuit unit further includes
a third memory that stores a plurality of fourth coupling coefficients associated with binary variables included in the plurality of variable groups, among the plurality of third coupling coefficients, and,
when the second circuit unit accepts a change in a value of a first binary variable among the plurality of binary variables, the second updating circuit updates the first local field, using an amount of change in the value of the first binary variable and a fourth coupling coefficient of the plurality of fourth coupling coefficients associated with the first binary variable.

7. The data processing device according to claim 2, wherein part of the first circuit unit and part of the second circuit unit are integrated.

8. A data processing program causing a computer to execute a process of:

holding a representative value of each variable group of a plurality of variable groups, formed with at least two binary variables of different values or equal values included in an evaluation function of a combinatorial optimization problem, and that is a value of one of the at least two binary variables;
storing a plurality of first coupling coefficients that indicate magnitudes of interaction between the variable groups of the plurality of variable groups;
holding a first local field to be used to specify a first amount of change to be caused in a value of the evaluation function by a change in the representative value of each variable group of the plurality of variable groups;
calculating the first amount of change for each variable group of the plurality of variable groups, using the first local field;

accepting a change in the representative value of one variable group of the plurality of variable groups, based on the first amount of change calculated for each variable group of the plurality of variable groups;

updating the representative value of a first variable group for which a change in the representative value is accepted, among the plurality of variable groups; and

updating the first local field, using a second coupling coefficient that has been read, from the plurality of first coupling coefficients stored in the first memory, based on a first identification number of the first variable group.

9. A data processing method comprising:

holding a representative value of each variable group of a plurality of variable groups, formed with at least two binary variables of different values or equal values included in an evaluation function of a combinatorial optimization problem, and that is a value of one of the at least two binary variables;

storing a plurality of first coupling coefficients that indicate magnitudes of interaction between the variable groups of the plurality of variable groups;

holding a first local field to be used to specify a first amount of change to be caused in a value of the evaluation function by a change in the representative value of each variable group of the plurality of variable groups;

calculating the first amount of change for each variable group of the plurality of variable groups, using the first local field;

accepting a change in the representative value of one variable group of the plurality of variable groups, based on the first amount of change calculated for each variable group of the plurality of variable groups;

updating the representative value of a first variable group for which a change in the representative value is accepted, among the plurality of variable groups; and

updating the first local field, using a second coupling coefficient that has been read, from the plurality of first coupling coefficients stored in the first memory, based on a first identification number of the first variable group.

# FIG. 1

EQUIVALENT SPIN

| | |
|---|---|
| EQUIVALENT SPIN | $\hat{x}_i = x_{i_1}$ |
| EQUIVALENT LOCAL FIELD (WHERE $Xi_1 \neq Xi_2$) | $\hat{h}_i = \hat{h}_{i_1} - \hat{h}_{i_2}$ |
| EQUIVALENT COUPLING COEFFICIENT (WHERE $Xi_1 \neq Xi_2$) | $\hat{W}_{ij} = \left(W_{i_1 j_1} - W_{i_1 j_2}\right) - \left(W_{i_2 j_1} - W_{i_2 j_2}\right)$ |

FIG. 2A

FIG. 2B

# FIG. 3

# FIG. 4

EVALUATION
FUNCTION
VALUE

◯ : SELECTED
(= 1)

▨ : UNSELECTED
(= 0)

$x_{i_1}$ $x_{i_2}$

$x_{i_1}$ $x_{i_2}$

$x_{i_1}$ $x_{i_2}$

EQUIVALENT SPIN STATE

# FIG. 5

$$(a_{ij}) = \begin{pmatrix} 0 & 1 & 1 & 1 & 0 & 0 & 0 & 0 & 1 & 0 \\ 1 & 0 & 1 & 0 & 1 & 0 & 1 & 0 & 0 & 1 \\ 1 & 1 & 0 & 0 & 0 & 0 & 1 & 1 & 0 & 1 \\ 0 & 0 & 1 & 0 & 1 & 1 & 1 & 1 & 1 & 0 \\ 1 & 1 & 0 & 1 & 0 & 1 & 0 & 1 & 0 & 0 \\ 0 & 0 & 0 & 1 & 1 & 0 & 0 & 0 & 1 & 1 \end{pmatrix} \longrightarrow$$

| | |
|---|---|
| x1 | x2 x7 x8 x10 |
| x2 | x1 x4 x8 |
| x3 | x5 x7 x9 |
| x4 | x2 x9 |
| x5 | x3 x7 x9 x10 |
| x6 | x8 |
| x7 | x1 x3 x5 x8 x10 |
| x8 | x1 x2 x6 x7 |
| x9 | x3 x4 x5 |
| x10 | x1 x5 x7 |

# FIG. 6

# FIG. 7

# FIG. 8

| EQUIVALENT SPIN | FIRST BINARY VARIABLE | SECOND BINARY VARIABLE | TYPE (SAME VALUE/ DIFFERENT VALUE) | ENABLE SIGNAL |
|---|---|---|---|---|
| $\hat{x}_1$ | $x_{1_1}$ | $x_{1_2}$ | $T_1$ | $En_1$ |
| $\hat{x}_2$ | $x_{2_1}$ | $x_{2_2}$ | $T_2$ | $En_2$ |
| $\vdots$ | $\vdots$ | $\vdots$ | $\vdots$ | $\vdots$ |
| $\hat{x}_i$ | $x_{i_1}$ | $x_{i_2}$ | $T_i$ | $En_i$ |

# FIG. 9

```
                    START

         EQUIVALENT SPIN LOOP          S10
           i=1; i<M+1; i++
                                                        ┐
                                        SAME VALUES     │
         DETERMINE TYPE                                 │ INITIALIZATION
                              S11                       │    PROCESS
DIFFERENT VALUES      S12                      S13      │
    Enᵢ = xᵢ₁ xor xᵢ₂        Enᵢ = not(xᵢ₁ xor xᵢ₂)    │
                                                        │
         EQUIVALENT SPIN LOOP          S14              ┘


                                        NO
    IS BINARY VARIABLE TO BE FLIPPED?
              YES                        S15

         EQUIVALENT SPIN LOOP          S16
           i=1; i<M+1; i++

                                        NO
    IS IT INCLUDED IN EQUIVALENT SPIN?
              YES                        S17
                              S18
         INVERT VALUE OF Enᵢ

         EQUIVALENT SPIN LOOP          S19
                                                        ┐
                                        NO              │
    IS EQUIVALENT SPIN TO BE FLIPPED?                   │
              YES                        S20            │ PROCESS
                                                        │ DURING
         EQUIVALENT SPIN LOOP          S21              │ SEARCH
           i=1; i<M+1; i++                              │
                                                        │
    IS IT INCLUDED IN ANOTHER           NO              │
        EQUIVALENT SPIN?                                │
              YES            S22                        │
         INVERT VALUE OF Enᵢ  S23                       │

         EQUIVALENT SPIN LOOP          S24              │
                                                        │
NO                                                      │
    IS TERMINATION CONDITION SATISFIED?  S25            ┘
              YES

                    END
```

# FIG. 10

# FIG. 11

START

PERFORM INITIALIZATION PROCESS — S30

GENERATE EQUIVALENT SPINS — S31

PERFORM DATA AND OPERATION SETTING — S32

SINGLE-BIT TRANSITION PROCESS — S33

IS SINGLE-BIT TRANSITION PROCESS TO BE ENDED? — S34
NO

YES

IS EQUIVALENT SPIN TRANSITION PROCESS TO BE PERFORMED? — S35
NO

YES

PERFORM EQUIVALENT SPIN MATCHING PROCESS — S36

CALCULATE INITIAL VALUES OF EQUIVALENT LOCAL FIELDS — S37

EQUIVALENT SPIN TRANSITION PROCESS — S38

IS EQUIVALENT SPIN TRANSITION PROCESS TO BE ENDED? — S39
NO

YES

IS TERMINATION CONDITION SATISFIED? — S40
NO

YES

OUTPUT SEARCH RESULT — S41

END

EP 4 485 287 A1

# FIG. 12

```
        SINGLE-BIT TRANSITION
             PROCESS

        CALCULATE ΔE                    S50

    DETERMINE TRANSITION ACCEPTANCE     S51
             POSSIBILITY

     SELECT BINARY VARIABLE TO BE       S52
              FLIPPED
                                S53
        IS FLIPPING POSSIBLE?
                            NO
             YES

    UPDATE VALUE OF BINARY VARIABLE     S54

     UPDATE VALUE OF EVALUATION         S55
              FUNCTION

        UPDATE LOCAL FIELDS             S56

       UPDATE ENABLE SIGNALS            S57


             RETURN
```

# FIG. 13

```
      ┌─────────────────────────┐
      │    EQUIVALENT SPIN      │
      │   TRANSITION PROCESS    │
      └─────────────────────────┘
                  │
                  ▼
      ┌─────────────────────────┐
      │      CALCULATE ΔE        │─── S60
      └─────────────────────────┘
                  │
                  ▼
      ┌─────────────────────────┐
      │ DETERMINE TRANSITION     │─── S61
      │ ACCEPTANCE POSSIBILITY   │
      └─────────────────────────┘
                  │
                  ▼
      ┌─────────────────────────┐
      │ SELECT EQUIVALENT SPIN   │─── S62
      │     TO BE FLIPPED        │
      └─────────────────────────┘
                  │              S63
                  ▼
      ╱─────────────────────────╲
      ⟨    IS FLIPPING POSSIBLE? ⟩────── NO
      ╲─────────────────────────╱
                  │ YES
                  ▼
      ┌─────────────────────────┐
      │ UPDATE VALUE OF          │─── S64
      │    EQUIVALENT SPIN       │
      └─────────────────────────┘
                  │
                  ▼
      ┌─────────────────────────┐
      │ UPDATE VALUE OF          │─── S65
      │  EVALUATION FUNCTION     │
      └─────────────────────────┘
                  │
                  ▼
      ┌─────────────────────────┐
      │ UPDATE VALUES OF TWO     │─── S66
      │   BINARY VARIABLES       │
      └─────────────────────────┘
                  │
                  ▼
      ┌─────────────────────────┐
      │ UPDATE LOCAL FIELDS AND  │─── S67
      │ EQUIVALENT LOCAL FIELDS  │
      └─────────────────────────┘
                  │
                  ▼
      ┌─────────────────────────┐
      │  UPDATE ENABLE SIGNALS   │─── S68
      └─────────────────────────┘
                  │
                  ▼
         ┌───────────────┐
         │    RETURN      │
         └───────────────┘
```

# FIG. 14

# FIG. 15

$$W_{i_1 j} \quad W_{ij} \quad W_{i_2 j}$$

$$x_{i_1} \qquad x_{i_2}$$

# FIG. 16

EP 4 485 287 A1

FIG. 17

# FIG. 18

START

PERFORM INITIALIZATION PROCESS — S70

GENERATE EQUIVALENT SPINS — S71

PERFORM DATA AND OPERATION SETTING — S72

SINGLE-BIT TRANSITION PROCESS — S73

IS SINGLE-BIT TRANSITION PROCESS TO BE ENDED? — S74

NO

YES

IS EQUIVALENT SPIN TRANSITION PROCESS TO BE PERFORMED? — S75

NO

YES

EQUIVALENT SPIN TRANSITION PROCESS — S76

IS EQUIVALENT SPIN TRANSITION PROCESS TO BE ENDED? — S77

NO

YES

IS TERMINATION CONDITION SATISFIED? — S78

NO

YES

OUTPUT SEARCH RESULT — S79

END

# FIG. 19

```
┌─────────────────────────┐
│  SINGLE-BIT TRANSITION  │
│        PROCESS          │
└─────────────────────────┘
            │
            ▼
┌─────────────────────────┐
│     CALCULATE ΔE        │──── S80
└─────────────────────────┘
            │
            ▼
┌─────────────────────────┐
│ DETERMINE TRANSITION    │
│ ACCEPTANCE POSSIBILITY  │──── S81
└─────────────────────────┘
            │
            ▼
┌─────────────────────────┐
│ SELECT BINARY VARIABLE  │
│    TO BE FLIPPED        │──── S82
└─────────────────────────┘
            │              S83
            ▼
┌─────────────────────────┐
│   IS FLIPPING POSSIBLE? │──── NO ──┐
└─────────────────────────┘          │
            │ YES                     │
            ▼                         │
┌─────────────────────────┐          │
│ UPDATE VALUE OF BINARY  │──── S84   │
│       VARIABLE          │          │
└─────────────────────────┘          │
            │                         │
            ▼                         │
┌─────────────────────────┐          │
│ UPDATE VALUE OF         │──── S85   │
│ EVALUATION FUNCTION     │          │
└─────────────────────────┘          │
            │                         │
            ▼                         │
┌─────────────────────────┐          │
│   UPDATE LOCAL FIELDS   │──── S86   │
└─────────────────────────┘          │
            │                         │
            ▼                         │
┌─────────────────────────┐          │
│ UPDATE VALUES OF BINARY │──── S87   │
│ VARIABLE INCLUDED IN    │          │
│   EQUIVALENT SPIN       │          │
└─────────────────────────┘          │
            │                         │
            ▼                         │
┌─────────────────────────┐          │
│ UPDATE EQUIVALENT       │──── S88   │
│    LOCAL FIELDS         │          │
└─────────────────────────┘          │
            │                         │
            ▼                         │
┌─────────────────────────┐          │
│  UPDATE ENABLE SIGNALS  │──── S89   │
└─────────────────────────┘          │
            │                         │
            ▼◄────────────────────────┘
      ┌──────────┐
      │  RETURN  │
      └──────────┘
```

# FIG. 20

```
                              ┌─────────────────────────┐ 61
                              │ UPDATE COUPLING         │
                   51a        │ COEFFICIENT             │
                              │ MEMORY                  │
                   51b        ├─────────────────────────┤
                              │ UPDATE COUPLING         │
        38                    │ COEFFICIENT             │              46
  ┌──────────────┐            │ MEMORY                  │        ┌──────────────┐
  │ EQUIVALENT   │            ├─────────────────────────┤        │  CONTROL     │
  │ SPIN DECODER │            │ COUPLING                │        │  CIRCUIT     │
  │ CIRCUIT      │      30     │ COEFFICIENT             │        └──────────────┘
  └──────────────┘            │ MEMORY                  │
                              ├─────────────────────────┤
                   21         │ EQUIVALENT COUPLING     │
                              │ COEFFICIENT MEMORY      │
                              └─────────────────────────┘
```

BINARY VARIABLE PAIR
UPDATE HOLDING CIRCUIT      52

EQUIVALENT SPIN ENABLE
DETERMINATION CIRCUIT       54

EQUIVALENT SPIN/BINARY
VARIABLE UPDATING CIRCUIT   62

EQUIVALENT SPIN/BINARY
VARIABLE HOLDING CIRCUIT    63

EQUIVALENT LOCAL FIELD/
LOCAL FIELD UPDATING CIRCUI   64

EQUIVALENT LOCAL FIELD/
LOCAL FIELD HOLDING CIRCUIT   65

ΔE CALCULATION CIRCUIT      66

ΔE HOLDING CIRCUIT          67

ENABLE PROCESSING
CIRCUIT                     28

TRANSITION EQUIVALENT SPIN/BINARY
VARIABLE SELECTION CIRCUIT   68

60

# FIG. 21

SINGLE-BIT/ EQUIVALENT SPIN TRANSITION PROCESS

SINGLE-BIT TRANSITION PROCESS

EQUIVALENT SPIN TRANSITION PROCESS (REPLICAS 2 AND 5) (EXCLUDING REPLICAS 2 AND 5)

EQUIVALENT SPIN TRANSITION PROCESS (REPLICAS 0, 3, AND 7) SINGLE-BIT TRANSITION PROCESS (EXCLUDING REPLICAS 0, 3, AND 7)

SINGLE-BIT/ EQUIVALENT SPIN TRANSITION PROCESS

TRIAL

UPDATING

SINGLE-BIT TRANSITION PROCESS

EQUIVALENT SPIN TRANSITION PROCESS (REPLICA 2)
SINGLE-BIT TRANSITION PROCESS (EXCLUDING REPLICA 2)

t30    t31 t32 t33

t34    t35 t36    t37

EP 4 485 287 A1

# FIG. 22

**EUROPEAN SEARCH REPORT**

Application Number

EP 24 17 3847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 896 622 A1 (FUJITSU LTD [JP]) 20 October 2021 (2021-10-20) * paragraph [0003] - paragraph [0004] * * paragraph [0012] - paragraph [0024] * * paragraph [0044] - paragraph [0051] * * paragraph [0064] - paragraph [0067] * * paragraph [0074] - paragraph [0089] * * paragraph [0112] - paragraph [0113] * * paragraph [0123] - paragraph [0124] * * paragraph [0141] - paragraph [0153]; claims 1-6; figures 1-7 * | 1-9 | INV. G06N5/01 G06N7/01 |
| A | EP 3 886 002 A1 (FUJITSU LTD [JP]) 29 September 2021 (2021-09-29) * the whole document * | 1-9 | |
| A,D | UMETANI SHUNJI ED - BIERWIRTH CHRISTIAN ET AL: "Exploiting variable associations to configure efficient local search algorithms in large-scale binary integer programs", EUROPEAN JOURNAL OF OPERATIONAL RESEARCH, ELSEVIER, AMSTERDAM, NL, vol. 263, no. 1, 31 May 2017 (2017-05-31), pages 72-81, XP085081968, ISSN: 0377-2217, DOI: 10.1016/J.EJOR.2017.05.025 * the whole document * | 1-9 | **TECHNICAL FIELDS SEARCHED** (IPC) G06N |

The present search report has been drawn up for all claims

| Place of search | Date of completion of the search | Examiner |
|---|---|---|
| The Hague | 24 October 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3847

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | | Publication date | Patent family member(s) | | | Publication date |
|---|---|---|---|---|---|---|
| EP 3896622 | A1 | 20-10-2021 | CN | 113536229 | A | 22-10-2021 |
| | | | EP | 3896622 | A1 | 20-10-2021 |
| | | | JP | 2021168096 | A | 21-10-2021 |
| | | | US | 2021319154 | A1 | 14-10-2021 |
| EP 3886002 | A1 | 29-09-2021 | CN | 113448378 | A | 28-09-2021 |
| | | | EP | 3886002 | A1 | 29-09-2021 |
| | | | JP | 7410394 | B2 | 10-01-2024 |
| | | | JP | 2021157360 | A | 07-10-2021 |
| | | | US | 2021303754 | A1 | 30-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020021209 A
- JP 2020064536 A

- JP 2021165965 A

**Non-patent literature cited in the description**

- **S. UMETANI**. Exploiting variable associations to configure efficient local search algorithms in large-scale binary integer programs. *European Journal of Operational Research*, 2017, vol. 263, 72-81